# EUROPEAN PATENT APPLICATION

(11) **EP 4 800 394 A1**
(43) Date of publication of application: **02.09.2026**
(21) Application number: 24882128.2
(22) Date of filing: 04.10.2024
(51) Int. Cl.: G01N 35/00, B01D 61/00, B01D 63/02, B01D 71/26, B01D 71/32, B01D 71/48, B01D 71/70, C02F 1/20, C02F 1/44

(54) **CHEMICAL ANALYSIS DEVICE, HOLLOW FIBER DEAERATION MODULE, AND METHOD FOR DEAERATING CONSTANT-TEMPERATURE WATER**

(30) Priority: 26.10.2023 JP 2023184019
(71) Applicant: DIC Corporation, Tokyo 174-8520 (JP)
(72) Inventor: KOBAYASHI Atsuo, Ichihara-shi, Chiba 290-8585 (JP); SUGANUMA Youhei, Ichihara-shi, Chiba 290-8585 (JP); OI Kazumi, Ichihara-shi, Chiba 290-8585 (JP)
(74) Representative: TBK
(86) International application number: PCT/JP2024/035540
(87) International publication number: WO 2025/089011

(57) **Abstract**

A hollow fiber deaeration module (20A) includes a housing (210) and a hollow fiber membrane (220) disposed in the housing. The housing (210) includes a liquid supply portion (216A) for connecting an outside of the housing (210) and an internal space (S2) of the hollow fiber membrane (220) and supplying constant-temperature water (W1) from the outside of the housing (210) to the internal space (S2) of the hollow fiber membrane (220), a liquid discharge portion (217A) for connecting the internal space (S2) of the hollow fiber membrane (220) and the outside of the housing (210) and discharging deaerated constant-temperature water (W2) from the internal space (S2) of the hollow fiber membrane (220) to the outside of the housing (210), and a gas discharge portion (218A) for connecting an internal space (S1) of the housing (210) and the outside of the housing (210) and depressurizing the internal space (S1) of the housing (210). The hollow fiber deaeration module (20A) has, at the gas discharge portion (218A), a one-touch joint structure (701A) that connects the housing (210) and a tube member.

## Description

### TECHNICAL FIELD

The present invention relates to a chemical analysis device, a hollow fiber deaeration module, and a method for deaerating constant-temperature water.
The present application claims the benefit of and priority to Japanese Patent Application No. 2023-184019, filed in Japan on October 26, 2023, the entire content of which is incorporated herein by reference.

### BACKGROUND ART

The chemical analysis device includes a deaeration module having a hollow fiber membrane, and the deaeration module has a mechanism of separating only gas in the liquid from the wall surface of the hollow fiber when the liquid passes through the inner side or the outer side of the hollow fiber membrane by applying a negative pressure to the outer side or the inner side of the hollow fiber membrane. The chemical analysis device is used as a device for measuring body fluid components such as blood and urine, and is widely used in an examination room, an examination center, and the like of a hospital.

In a known chemical analysis device, for the purpose of miniaturizing the entire system and preventing deterioration in performance of a deaeration unit in a deaerated water storage tank, there has been proposed a device which enables removal of dissolved gas in pure water by heating pure water and maintaining the temperature of the pure water taken from the outside at a temperature slightly higher than a use temperature in a deaeration unit formed around a preheat tank (Patent Document 1). However, in this method, in order to sufficiently cope with the increase in the speed of the system, a storage tank was required to store a large amount of deaerated water, which made it difficult to achieve the miniaturization of the entire system.

In order to cope with the increase in the speed of this system, it has been proposed to use a hollow fiber deaeration module having a mechanism in which a hollow fiber membrane of a silicone resin is formed, and by applying a negative pressure to the outer side of the hollow fiber membrane, only gas in the liquid is separated from the wall surface of the hollow fiber when the liquid passes through the inner side of the hollow fiber membrane (Patent Document 2).

### CITATION LIST

### PATENT DOCUMENTS

Patent Document 1: JP 63-165761 A
Patent Document 2: WO 2020/261659

### SUMMARY OF INVENTION

### TECHNICAL PROBLEM

In recent years, amidst the changing environment surrounding healthcare, there is a strong demand for chemical analysis devices to provide high-quality data, support rapid examination, and improve examination efficiency; however, on the other hand, there is a problem in that air bubbles in the reverse osmosis (RO) water used in the analysis reduce measurement accuracy.

To solve this problem, a method of removing dissolved gas in the RO water is effective. Further, as a method in which the removal of dissolved gas can be efficiently performed, there is a method in which the hollow fiber deaeration module is incorporated into the chemical analysis device to perform continuous deaeration. The performance conditions for the hollow fiber deaeration module to be incorporated into the device are as follows: (1) a predetermined deaeration performance, (2) a size (small size) mountable on the device, (3) a low pressure loss, and (4) a long life.

However, in the case of the hollow fiber deaeration module as described above, since the hollow fiber deaeration module is continuously used for a long period of time when installed in the analysis device, volatilized water may accumulate in the vacuum portion or the vacuum path inside the module, and the deaeration performance may be lowered. In addition, since the vacuum path is opened periodically, bacteria proliferate and cause deterioration of performance.

In a known hollow fiber deaeration module, a hose nipple joint is generally used for a connection portion between a housing and a tube member. Since a hose band (metal ring) is removed and the tube member is pulled out each time when water accumulated in a vacuum portion is periodically taken out, stress is repeatedly applied to a hose nipple portion of the joint, and a portion near a root of the hose nipple joint is likely to be broken due to tensile fatigue. In addition, the hose nipple joint is also used for a joint connected to a hollow fiber, and there is a concern that the hose nipple joint is likely to be broken and the water leaks. In addition, since a tube is connected while being screwed even when the tube member is inserted into the hose nipple joint, stress in a direction perpendicular to an axial direction of the hose nipple joint is generated, the hose nipple joint is likely to be broken, and compression fatigue and bending fatigue may occur due to repeated screwing. When the hose nipple joint deteriorates as described above, gas or water leaks from the root of the hose nipple joint, and original performance of the hollow fiber deaeration module deteriorates. In addition, an inner peripheral surface of the tube member may be scraped due to friction between the hose nipple joint and the tube member, and as a result, sealability between the hose nipple joint and the tube member deteriorates, so that dust (particles) and the like are likely to be mixed.

An object of the present invention is to provide a hollow fiber deaeration module that is compact with low pressure loss, can maintain original good deaeration performance even after a long time of continuous use, and can also suppress the proliferation of bacteria and the like, a chemical analysis device equipped with the hollow fiber deaeration module, and a method for deaerating constant-temperature water.

### SOLUTION TO PROBLEM

A chemical analysis device according to a first aspect of the present invention is a chemical analysis device configured to perform chemical analysis or biochemical analysis of a specimen and includes a constant-temperature tank configured to maintain a temperature of a container containing a specimen, and a deaeration unit including a hollow fiber deaeration module configured to deaerate a dissolved gas contained in constant-temperature water in the constant-temperature tank. The hollow fiber deaeration module includes a housing and a hollow fiber membrane disposed in an internal space of the housing. The housing includes a first liquid supply portion configured to connect an outside of the housing and an internal space of the hollow fiber membrane and supply the constant-temperature water from the outside of the housing to an inside of the hollow fiber membrane, a first liquid discharge portion configured to connect the internal space of the hollow fiber membrane and the outside of the housing and discharge deaerated constant-temperature water from the internal space of the hollow fiber membrane to the outside of the housing, and at least one first gas discharge portion configured to connect the internal space of the housing and the outside of the housing and depressurize the internal space of the housing. The hollow fiber deaeration module has, at the at least one first gas discharge portion, a one-touch joint structure or a luer fitting joint structure that connects the housing and a tube member.

The hollow fiber deaeration module may further have, at at least one of the first liquid supply portion or the first liquid discharge portion, the one-touch joint structure or the luer fitting joint structure that connects the housing and the tube member.

In one or a plurality of the at least one first gas discharge portion, the first liquid supply portion, and the first liquid discharge portion, the housing may include an extending portion which is provided integrally with the housing and extends outward from the housing and to which the one-touch joint structure or the luer fitting joint structure is attached.

The housing may further include at least one rib portion provided in the extending portion.

The housing may include a cylindrical body disposed in such a way that an axial direction is substantially horizontal, a first lid unit attached to one axial end portion of the cylindrical body, and a second lid unit attached to the other axial end portion of the cylindrical body. The first lid unit may include the first liquid supply portion and the second lid unit may include the first liquid discharge portion. The cylindrical body may include the at least one first gas discharge portion.

The cylindrical body may have a cylindrical shape disposed in such a way that the axial direction is parallel to a horizontal direction. The at least one first gas discharge portion may be provided at a peripheral wall of the cylindrical body.

The cylindrical body may include a first screw portion where the cylindrical body and the first lid unit are screwed together, and a second screw portion where the cylindrical body and the second lid unit are screwed together.

The hollow fiber deaeration module may include a first sealing portion that seals the one axial end portion of the cylindrical body and a second sealing portion that seals the other axial end portion of the cylindrical body. One longitudinal end portion of the hollow fiber membrane may be fixed to the first sealing portion and the other longitudinal end portion of the hollow fiber membrane may be fixed to the second sealing portion.

The hollow fiber membrane may be made of a polyolefin resin, a fluororesin, or a silicone resin.

The housing may be made of a polyolefin resin or an aromatic polyester resin.

A chemical analysis device according to a second aspect of the present invention is a chemical analysis device configured to perform chemical analysis or biochemical analysis of a specimen and includes a constant-temperature tank configured to maintain a temperature of a container containing a specimen, and a deaeration unit including a hollow fiber deaeration module configured to deaerate a dissolved gas contained in constant-temperature water in the constant-temperature tank. The hollow fiber deaeration module includes a housing and a hollow fiber membrane disposed in an internal space of the housing. The housing includes a second liquid supply portion configured to connect an outside of the housing and the internal space of the housing and supply the constant-temperature water from the outside of the housing to the internal space of the housing, a second liquid discharge portion configured to connect the internal space of the housing and the outside of the housing and discharge deaerated constant-temperature water from the internal space of the housing to the outside of the housing, and at least one second gas discharge portion configured to connect an internal space of the hollow fiber membrane and the outside of the housing and depressurize the internal space of the hollow fiber membrane. The hollow fiber deaeration module has, at the at least one second gas discharge portion, a one-touch joint structure or a luer fitting joint structure that connects the housing and a tube member.

The hollow fiber deaeration module may further have, at at least one of the second liquid supply portion or the second liquid discharge portion, the one-touch joint structure or the luer fitting joint structure that connects the housing and the tube member.

In one or a plurality of the at least one second gas discharge portion, the second liquid supply portion, and the second liquid discharge portion, the housing may include an extending portion which is provided integrally with the housing and extends outward from the housing and in which the one-touch joint structure or the luer fitting joint structure is disposed.

The housing may further include at least one rib portion provided in the extending portion.

The housing may include a cylindrical body disposed in such a way that an axial direction is substantially vertical, a third lid unit attached to an axially lower end portion of the cylindrical body, and a fourth lid unit attached to an axially upper end portion of the cylindrical body. The cylindrical body may include the second liquid supply portion and the fourth lid unit may include the second liquid discharge portion. The third lid unit may include the at least one second gas discharge portion.

The third lid unit may include the at least one second gas discharge portion.

The cylindrical body may include a third screw portion where the cylindrical body and the third lid unit are screwed together, and a fourth screw portion where the cylindrical body and the fourth lid unit are screwed together.

The hollow fiber deaeration module may include a third sealing portion that seals the axially upper end portion of the cylindrical body and a fourth sealing portion that seals the axially lower end portion of the cylindrical body. A longitudinally upper end portion of the hollow fiber membrane may be fixed to the third sealing portion and a longitudinally lower end portion of the hollow fiber membrane may be fixed to the fourth sealing portion.

The hollow fiber membrane may be made of a polyolefin resin, a fluororesin, or a silicone resin.

The housing may be made of a polyolefin resin or an aromatic polyester resin.

A hollow fiber deaeration module according to a third aspect of the present invention is a hollow fiber deaeration module configured to perform chemical analysis or biochemical analysis of a specimen and includes a housing, and a hollow fiber membrane disposed in an internal space of the housing. The housing includes a first liquid supply portion configured to connect an outside of the housing and an internal space of the hollow fiber membrane and supply the constant-temperature water from the outside of the housing to an inside of the hollow fiber membrane, a first liquid discharge portion configured to connect the internal space of the hollow fiber membrane and the outside of the housing and discharge deaerated constant-temperature water from the internal space of the hollow fiber membrane to the outside of the housing, and at least one first gas discharge portion configured to connect the internal space of the housing and the outside of the housing and depressurize the internal space of the housing. A one-touch joint structure or a luer fitting joint structure that connects the housing and a tube member is provided at the at least one first gas discharge portion.

A hollow fiber deaeration module according to a fourth aspect of the present invention is a hollow fiber deaeration module configured to perform chemical analysis or biochemical analysis of a specimen and includes a housing, and a hollow fiber membrane disposed in an internal space of the housing. The housing includes a second liquid supply portion configured to connect an outside of the housing and the internal space of the housing and supply constant-temperature water from the outside of the housing to the internal space of the housing, a second liquid discharge portion configured to connect the internal space of the housing and the outside of the housing and discharge deaerated constant-temperature water from the internal space of the housing to the outside of the housing, and at least one second gas discharge portion configured to connect an internal space of the hollow fiber membrane and the outside of the housing and depressurize the internal space of the hollow fiber membrane. A one-touch joint structure or a luer fitting joint structure that connects the housing and a tube member is provided at the at least one second gas discharge portion.

A method for deaerating constant-temperature water according to a fifth aspect of the present invention is a method for deaerating a dissolved gas contained in constant-temperature water in the constant-temperature tank in the chemical analysis device according to the first or second aspect and includes, in the hollow fiber deaeration module, deaerating the constant-temperature water by supplying the constant-temperature water to an outside of a hollow fiber membrane and depressurizing an inside of the hollow fiber membrane.

### ADVANTAGEOUS EFFECTS OF INVENTION

According to the present invention, it is possible to provide a chemical analysis device equipped with a hollow fiber deaeration module that is compact with low pressure loss, can maintain original good deaeration performance even after a long time of continuous use, and can also suppress the proliferation of bacteria and the like, and a method for deaerating constant-temperature water.

### BRIEF DESCRIPTION OF DRAWINGS

FIG. 1 is a view schematically illustrating an example of a configuration of a chemical analysis system including a chemical analysis device according to an embodiment of the present invention.
FIG. 2 is a view schematically illustrating an example of a configuration of the chemical analysis device according to the embodiment of the present invention.
FIG. 3 is a view schematically illustrating an example of a configuration of an internal perfusion type hollow fiber deaeration module provided in the chemical analysis device of FIG. 2.
FIG. 4(A) is a partial cross-sectional view illustrating a configuration of a first sealing portion provided at one axial end portion of a cylindrical body illustrated in FIG. 3, and FIG. 4(B) is a partial cross-sectional view illustrating a configuration of a second sealing portion provided at the other axial end portion of the cylindrical body illustrated in FIG. 3.
FIG. 5 is a cross-sectional view illustrating an example of a configuration of a one-touch joint structure provided in a gas discharge portion of FIG. 3.
FIG. 6 is a view illustrating a modification of an internal perfusion type hollow fiber deaeration module of FIG. 3.
FIG. 7 is a view illustrating an external perfusion type hollow fiber deaeration module.
FIG. 8(A) is a partial cross-sectional view illustrating a configuration of a third sealing portion provided at an axially lower end portion of the cylindrical body illustrated in FIG. 7, and FIG. 8(B) is a partial cross-sectional view illustrating a configuration of a fourth sealing portion provided at an axially upper end portion of the cylindrical body illustrated in FIG. 7.
FIG. 9 is a side view illustrating a modification of the hollow fiber deaeration module of FIG. 7.
FIG. 10(A) is a top view illustrating another modification of the hollow fiber deaeration module of FIG. 8, FIG. 10(B) is a side view, and FIG. 10(C) is a front view.
FIG. 11 is a view illustrating another modification of the internal perfusion type hollow fiber deaeration module of FIG. 3.
FIG. 12 is a view illustrating another modification of the internal perfusion type hollow fiber deaeration module of FIG. 3.
FIG. 13 is a block diagram illustrating a modification of the chemical analysis device illustrated in FIG. 1.
FIG. 14 is a block diagram schematically illustrating another modification of the chemical analysis device illustrated in FIG. 1.
FIG. 15 is a block diagram schematically illustrating another modification of the chemical analysis system of FIG. 1.
FIG. 16 is a block diagram schematically illustrating a modification of a (bio) chemical analysis unit illustrated in FIG. 1.

### DESCRIPTION OF EMBODIMENTS

Embodiments of the present invention will be described below. The present invention is not limited to the following embodiments.

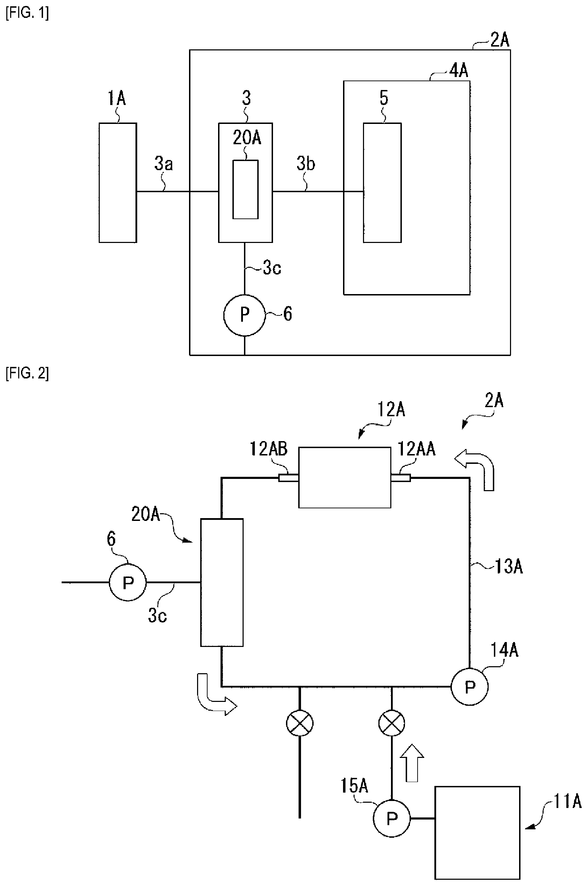

FIG. 1 is a view schematically illustrating an example of a configuration of a chemical analysis system including a chemical analysis device according to the embodiment of the present invention.
As illustrated in FIG. 1, the chemical analysis system includes a pure water supply device 1A and a chemical analysis device 2A. In the chemical analysis device 2A, a deaeration device (deaeration unit) 3 for deaerating constant-temperature water supplied from the pure water supply device 1A and a reaction tank 5 in a (bio) chemical analysis unit 4A are arranged. The pure water supply device 1A and the deaeration device 3 are connected to each other by a flow path 3a, and the deaeration device 3 and the reaction tank 5 are connected to each other by a flow path 3b.
The deaeration device 3 and a vacuum pump 6 are connected to each other by a flow path 3c. The flow path 3c is configured with, for example, an intake pipe. The dissolved oxygen and air bubbles of the pure water supplied from the pure water supply device 1A to the deaeration device 3 are removed by the operation of the vacuum pump. In the present embodiment, the pure water deaerated by the deaeration device 3 is supplied to the reaction tank (constant-temperature tank) 5 via the flow path 3b. As will be described below, the deaeration device 3 and the reaction tank 5 form a circulation path, and the pure water deaerated by the deaeration device 3 may be supplied to the circulation path.

The deaeration device 3 includes a hollow fiber deaeration module 20A, and the flow paths 3a and 3b are connected to the hollow fiber deaeration module 20A.

The chemical analysis device 2A performs chemical analysis or biochemical analysis (hereinafter, "chemical analysis or biochemical analysis" is also referred to as "(bio) chemical analysis") of a specimen. The chemical analysis device 2A is configured to separate only a gas in a liquid from the liquid through a wall surface of the hollow fiber when the liquid passes through the inner side or the outer side of the hollow fiber membrane by deaerating the outer side or the inner side of the hollow fiber membrane.

FIG. 2 is a view schematically illustrating an example of a configuration of the chemical analysis device according to the embodiment of the present invention. As illustrated in FIG. 2, the chemical analysis device 2A includes a water supply tank 11A, a constant-temperature tank 12A, and the hollow fiber deaeration module 20A. The water supply tank 11A and the constant-temperature tank 12A are connected to each other via a flow path 13A forming a circulation path, and a liquid feeding pump 14A is provided in the flow path 13A. The water supply tank 11A is connected to the flow path 13A via a water supply pump 15A. A supply pipe 12AA is attached to a liquid supply side of the constant-temperature tank 12A, and a discharge pipe 12AB is attached to a liquid discharge side. The hollow fiber deaeration module 20A is provided in the flow path 13A, and further the vacuum pump 6 is connected via the flow path 3c. In the present embodiment, pure water is supplied from the water supply tank 11A to the flow path 13A by the operation of the water supply pump 15A. The pure water supplied to the flow path 13A is supplied to the constant-temperature tank 12A and the hollow fiber deaeration module 20A by the operation of the liquid feeding pump 14A. The pure water supplied to the constant-temperature tank 12A is heated to a predetermined temperature, and dissolved oxygen and bubbles in the pure water supplied from the constant-temperature tank 12A to the hollow fiber deaeration module 20A are deaerated by the operation of the vacuum pump 6.

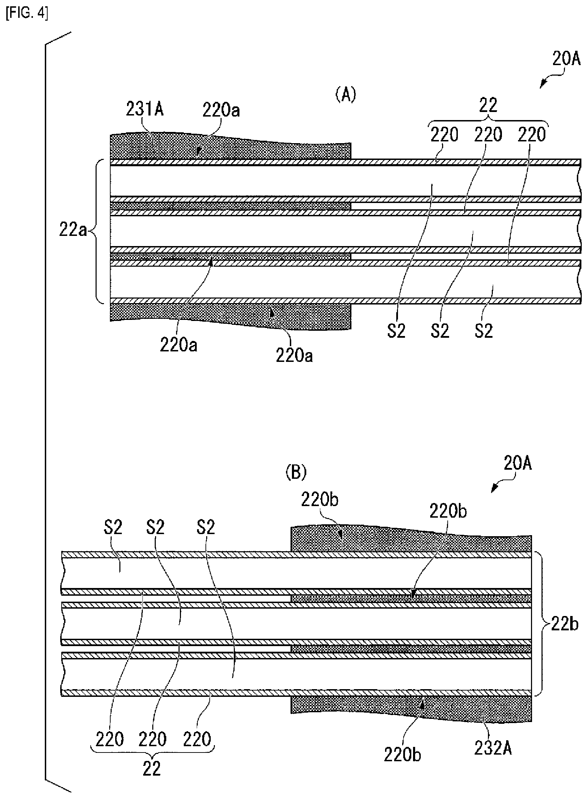

The hollow fiber deaeration module 20A has a hollow fiber membrane bundle 22 in which a plurality of hollow fiber membranes 220 are bundled in a curtain-like shape using vertical threads (refer to FIGS. 4(A) and 4(B)). Hereinafter, for convenience of description, the hollow fiber membrane bundle 22 may be referred to as a "hollow fiber membrane 220". Details of the hollow fiber membranes will be described below.

The chemical analysis device 2A performs chemical analysis or biochemical analysis (hereinafter, "chemical analysis or biochemical analysis" is also referred to as "(bio) chemical analysis") of a specimen. The chemical analysis device 2A is configured to separate only the gas in the liquid from the liquid through the wall surface of the hollow fiber when the liquid passes through the inner side or the outer side of the hollow fiber membrane by deaerating the outer side or the inner side of the hollow fiber membrane.

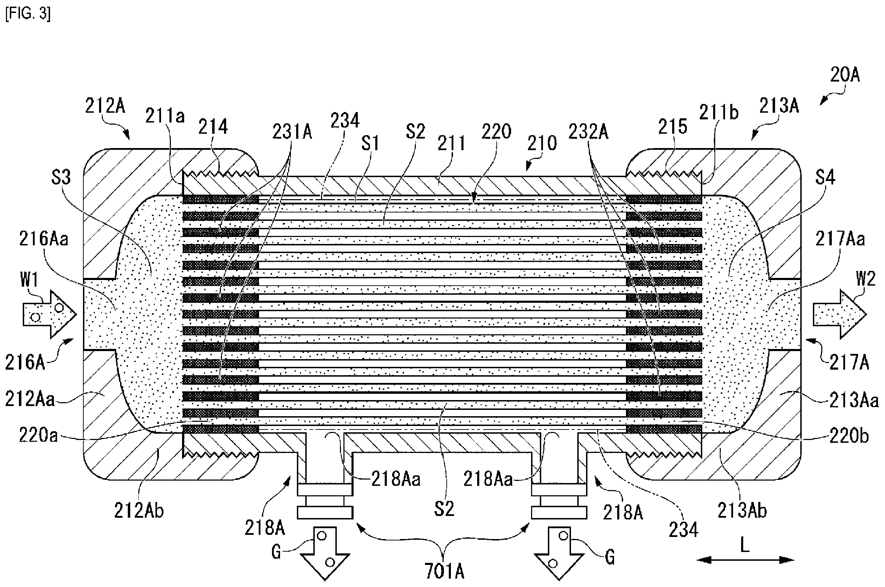

FIG. 3 is a view schematically illustrating an example of a configuration of the internal perfusion type hollow fiber deaeration module 20A provided in the chemical analysis device 2A of FIG. 2. In the internal perfusion type hollow fiber deaeration module 20A, constant-temperature water W1 is supplied to the inner side of the hollow fiber membrane 220, and the outer side of the hollow fiber membrane 220 is depressurized to deaerate the constant-temperature water W1 to generate deaerated constant-temperature water W2.

The hollow fiber deaeration module 20A includes a housing 210 and the hollow fiber membrane 220 disposed in an internal space S1 of the housing 210. The housing 210 includes a cylindrical body 211 disposed such that an axial direction L is substantially horizontal, a first lid unit 212A attached to one axial end portion 211a of the cylindrical body 211, and a second lid unit 213A attached to the other axial end portion 211b of the cylindrical body 211.

The cylindrical body 211 has the internal space S1, and the hollow fiber membrane 220 is accommodated in the internal space S1. The cylindrical body 211 has, for example, a cylindrical shape extending in the axial direction L, and both end portions of the cylindrical body 211 are open. In the present embodiment, the cylindrical body 211 includes a first screw portion 214 where the cylindrical body 211 and the first lid unit 212A are screwed together, and a second screw portion 215 where the cylindrical body 211 and the second lid unit 213A are screwed together. The first lid unit 212A and the second lid unit 213A are fixed to the cylindrical body 211 by the first screw portion 214 and the second screw portion 215, respectively.

The attachment of the first lid unit 212A and the second lid unit 213A to the cylindrical body 211 is not limited to screwing, and can be performed by fitting, bonding, welding, or the like. Either or both of the first lid unit 212A and the second lid unit 213A may be detachably attached to the cylindrical body 211. A sealing unit (not illustrated) such as an O-ring may be provided at the attachment unit of the first lid unit 212A and the second lid unit 213A with respect to the cylindrical body 211. When the sealing unit is formed of an O-ring, it is preferable that the O-ring be disposed in an annular groove unit or the like formed in the one axial end portion 211a or the other axial end portion 211b of the cylindrical body 211. The sealing unit can prevent liquid leakage that may occur between the cylindrical body 211 and the first lid unit 212A or the second lid unit 213A. Since the sealing unit does not always come into contact with liquid, the material of the sealing unit is not particularly limited within a range in which the above-described effect can be obtained. From the viewpoint of stain resistance, preferable materials for the sealing unit include polyolefin resins such as a polypropylene resin, the above-described fluororesins, or aromatic polyester resins such as a polycarbonate resin or polyethylene terephthalate.

The first lid unit 212A includes a first wall portion 212Aa having a substantially disc shape provided perpendicularly to the axial direction L, and a second wall portion 212Ab having a substantially ring shape extending parallel to the axial direction L from the peripheral edge of the first wall portion 212Aa. The first lid unit 212A is fixed to the cylindrical body 211 by engaging the inner peripheral surface of the first lid unit 212A with the outer peripheral surface of the cylindrical body 211.

The housing 210 includes a liquid supply portion (first liquid supply portion) 216A for connecting the outside of the housing 210 and an internal space S2 of the hollow fiber membrane 220 to each other, and for supplying the constant-temperature water W1 from the outside of the housing 210 to the internal space S2 of the hollow fiber membrane 220. The liquid supply portion 216A includes a liquid supply port 216Aa that is formed, for example, on the first wall portion 212Aa of the first lid unit 212A, for supplying the constant-temperature water W1 into the first lid unit 212A. The liquid supply port is not particularly limited, and is, for example, a circular opening in a side view formed on the central axis of the cylindrical body 211. The flow path 3a connected to the deaeration device 3 is connected to the liquid supply portion 216A. The connection between the liquid supply portion 216A and the flow path 3a is not particularly limited, and may be performed by screwing or fitting.

The second lid unit 213A includes a first wall portion 213Aa having a substantially disc shape provided perpendicularly to the axial direction L, and a second wall portion 213Ab having a substantially ring shape extending parallel to the axial direction L from the peripheral edge of the first wall portion 213Aa. The second lid unit 213A is fixed to the cylindrical body 211 by engaging the inner peripheral surface of the second lid unit 213A with the outer peripheral surface of the cylindrical body 211.

The housing 210 includes a liquid discharge portion (first liquid discharge portion) 217A for connecting the internal space S2 of the hollow fiber membrane 220 and the outside of the housing 210 to each other, and for discharging the constant-temperature water W2 deaerated from the internal space S2 of the hollow fiber membrane 220 to the outside of the housing 210. The liquid discharge portion 217A includes a liquid discharge port 217Aa that is formed, for example, on the first wall portion 213Aa of the second lid unit 213A, for supplying the constant-temperature water W2 to the outside. The liquid discharge port 217Aa is not particularly limited, and is, for example, a circular opening in a side view formed on the central axis of the cylindrical body 211. The flow path 3b connected to the reaction tank 5 is connected to the liquid discharge portion 217A. The connection between the liquid discharge portion 217A and the flow path 3b is not particularly limited, and may be performed by screwing or fitting. In addition, the liquid discharge portion 217A and the flow path 3b may be connected by a predetermined structure to be described below.

The housing 210 also includes a gas discharge portion (first gas discharge portion) 218A for connecting the internal space S1 of the housing 210 and the outside of the housing 210 to each other, and for depressurizing the internal space S1 of the housing 210. The gas discharge portion 218A includes a gas discharge port 218Aa that is formed, for example, in the cylindrical body 211 for discharging gas G in the internal space S1. As a result, moisture generated in the cylindrical body 211 is discharged from the cylindrical body 211 to the outside via the gas discharge portion 218A. The flow path 3c connected to the vacuum pump 6 is connected to the gas discharge portion 218A. The gas discharge portion 218A and the flow path 3c are connected by a predetermined structure to be described below.

In the present embodiment, the housing 210 includes two gas discharge portions 218A and 218A. The two gas discharge portions 218A and 218A are arranged side by side along the axial direction L in the housing 210. Accordingly, the entire internal space S1 of the housing 210 can be efficiently and uniformly depressurized. The housing 210 may have a plurality of gas discharge portions 218A, 218A, and the like or one gas discharge portion 218A, depending on the dimension of the housing 210, the dimension of the gas discharge port 218Aa, the capacity of the vacuum pump, and the like.

The materials used for the cylindrical body 211, the first lid unit 212A, and the second lid unit 213A, which constitute the housing 210, are not particularly limited; however, from the viewpoint of ease of production, chemical resistance, and stain resistance, polyolefin resins such as a polypropylene resin, and aromatic polyester resins such as a polycarbonate resin or polyethylene terephthalate are preferred. In this case, the cylindrical body 211, the first lid unit 212A, and the second lid unit 213A can be produced by injection molding.

The hollow fiber membrane 220 is a hollow fiber-shaped membrane that allows gases to permeate but does not allow liquids to permeate. The material, membrane shape, membrane form, and the like of the hollow fiber membrane 220 are not particularly limited. From the viewpoint of ease of production, chemical resistance, and stain resistance, the material of the hollow fiber membrane 220 includes, for example, polyolefin resins such as polypropylene and poly(4-methylpentene-1), fluororesins such as PTFE, amorphous fluoropolymers, tetrafluoroethylene-perfluoroalkyl vinyl ether copolymers (hereinafter also referred to as PFA), tetrafluoroethylene-hexafluoropropylene copolymers (hereinafter also referred to as FEP), tetrafluoroethylene-ethylene copolymers (hereinafter also referred to as ETFE), polychlorotrifluoroethylene (hereinafter also referred to as PCTFE), and polyvinylidene fluoride (hereinafter also referred to as PVDF), and silicone resins. More specifically, the amorphous fluoropolymer (hereinafter also referred to as "Teflon (trade name) AF") may be an amorphous fluororesin containing a copolymer containing tetrafluoroethylene and perfluoro-2,2-dimethyl-1,3-dioxole as a comonomer. Examples of the membrane shape (shape of the side wall) of the hollow fiber membrane 220 include a porous membrane, a microporous membrane, and a homogeneous membrane (non-porous membrane) not having a porous membrane. Examples of the membrane form of the hollow fiber membrane 220 include a symmetrical membrane (homogeneous membrane) having a uniform chemical or physical structure of the entire membrane, and a non-symmetrical membrane (heterogeneous membrane) having a membrane chemically or physically different depending on the membrane part. The non-symmetrical membrane (heterogeneous membrane) is a membrane having a non-porous dense layer and a porous material. In this case, the dense layer may be formed anywhere in the membrane, such as the surface layer part of the membrane or the inside of the porous membrane. The heterogeneous membrane includes a composite membrane having a different chemical structure and a multilayer structure membrane having a three-layer structure.

In particular, the heterogeneous membrane using a poly(4-methylpentene-1) resin has a dense layer for blocking liquid, and thus the heterogeneous membrane is particularly preferable for deaerating liquids other than water, such as constant-temperature water. In addition, in the case of the hollow fiber used for the external perfusion type, the dense layer is preferably formed on the outer surface of the hollow fiber.

The hollow fiber membrane bundle 22 can be formed, for example, in a sheet-like article in which the plurality of hollow fiber membranes 220 are bundled in a curtain-like shape using vertical threads. In this case, for example, the hollow fiber deaeration module 20A can be produced by winding the sheet-like article to form the hollow fiber membrane bundle 22 and fixing both end portions of the hollow fiber membrane bundle 22 with a sealing material to be described below. From the viewpoint of ease of production, chemical resistance, and stain resistance, preferable materials for the vertical threads include polyolefin resins such as a polypropylene resin, or the above-described fluororesins.

FIG. 4(A) is a partial cross-sectional view illustrating a configuration of a first sealing portion 231A provided at one axial end portion 211a of the cylindrical body 211 illustrated in FIG. 3, and FIG. 4(B) is a partial cross-sectional view illustrating a configuration of a second sealing portion 232A provided at the other axial end portion 211b of the cylindrical body 211 illustrated in FIG. 3.
As illustrated in FIGS. 4(A) and 4(B), the hollow fiber deaeration module 20A includes the first sealing portion 231A that seals one axial end portion 211a (refer to FIG. 3) of the cylindrical body 211, and the second sealing portion 232A that seals the other axial end portion 211b (refer to FIG. 3) of the cylindrical body 211. One longitudinal end portion 220a of the hollow fiber membrane 220 is fixed to the first sealing portion 231A, and the other longitudinal end portion 220b of the hollow fiber membrane 220 is fixed to the second sealing portion 232A. That is, one longitudinal end portion 22a of the hollow fiber membrane bundle 22 is fixed to the first sealing portion 231A, and the other longitudinal end portion 22b is fixed to the second sealing portion 232A.

The first sealing portion 231A is filled in the entire region of the hollow fiber membrane 220 other than the internal space S2 in a cross-section perpendicular to the axial direction L of the cylindrical body 211. That is, the first sealing portion 231A is not filled in the internal space S2 of the hollow fiber membrane 220, and is filled between the hollow fiber membranes 220 and between the hollow fiber membrane bundle 22 and the inner wall of the cylindrical body 211.

Similar to the first sealing portion 231A, the second sealing portion 232A is filled in the entire region of the hollow fiber membrane 220 other than the internal space S2 in a cross-section perpendicular to the axial direction L of the cylindrical body 211. That is, the second sealing portion 232A is not filled in the internal space S2 of the hollow fiber membrane 220, and is filled between the hollow fiber membranes 220 and between the hollow fiber membrane bundle 22 and the inner wall of the cylindrical body 211.

The first sealing portion 231A and the second sealing portion 232A are not particularly limited; however, from the viewpoint of ease of production, chemical resistance, and stain resistance, the first sealing portion 231A and the second sealing portion 232A are preferably formed of, for example, a cured product of a curable resin composition containing an epoxy resin or a (meth)acrylic resin, or a polyolefin resin such as polyethylene or polypropylene.

In the present embodiment, the first sealing portion 231A seals one axial end portion 211a of the cylindrical body 211 in a state where an internal space S3 of the first lid unit 212A and the internal space S2 of the hollow fiber membrane 220 communicate with each other. The second sealing portion 232A seals the other axial end portion 211b of the cylindrical body 211 in a state where an internal space S4 of the second lid unit 213A and the internal space S2 of the hollow fiber membrane 220 communicate with each other. That is, the internal space S3 of the first lid unit 212A and the internal space S4 of the second lid unit 213A are partitioned from the internal space S1 of the housing 210 by the first sealing portion 231A and the second sealing portion 232A, respectively, and the internal space S3 of the first lid unit 212A, the internal space S2 of the hollow fiber membrane 220, and the internal space S4 of the second lid unit 213A communicate with each other in this order.

Thus, the constant-temperature water W1 supplied from the liquid supply portion 216A to the internal space S3 of the first lid unit 212A is supplied only to the internal space S2 of the hollow fiber membrane 220, and is prevented from flowing into the internal space S1 of the housing 210. Further, since the gas is exhausted from the gas discharge port 218Aa by the vacuum pump 6, the internal space S1 of the housing 210 is depressurized, preferably to a vacuum. Thus, when the constant-temperature water W1 passes through the internal space S2 of the hollow fiber membrane 220, the dissolved gas and air bubbles of the constant-temperature water W1 are drawn to the outer side of the hollow fiber membrane 220, whereby the constant-temperature water W1 is deaerated (deaeration method).

The deaerated constant-temperature water W2 flows into the internal space S4 of the second lid unit 213A from only the internal space S2 of the hollow fiber membrane 220, and is supplied from the liquid discharge portion 217A into the reaction tank 5 of the (bio) chemical analysis unit 4A.

As described above, in the hollow fiber deaeration module 20A, a liquid contact portion of the constant-temperature water W1 and W2 is mainly composed of the first lid unit 212A, the first sealing portion 231A, the hollow fiber membrane 220, the second sealing portion 232A, and the second lid unit 213A. By using the above-described preferable material for each unit, which constitutes the liquid contact portion, the chemical resistance can be excellent and the mixing of foreign substances can be suppressed even when used for a long period in the deaeration of the constant-temperature water.

In the present embodiment, the hollow fiber deaeration module 20A has one-touch joint structures 701A and 701A that connect the housing 210 and the tube member to each other in the gas discharge portions 218A and 218A. The one-touch joint structures 701A and 701A are attached to the housing 210 in a sealed state such as airtightness.

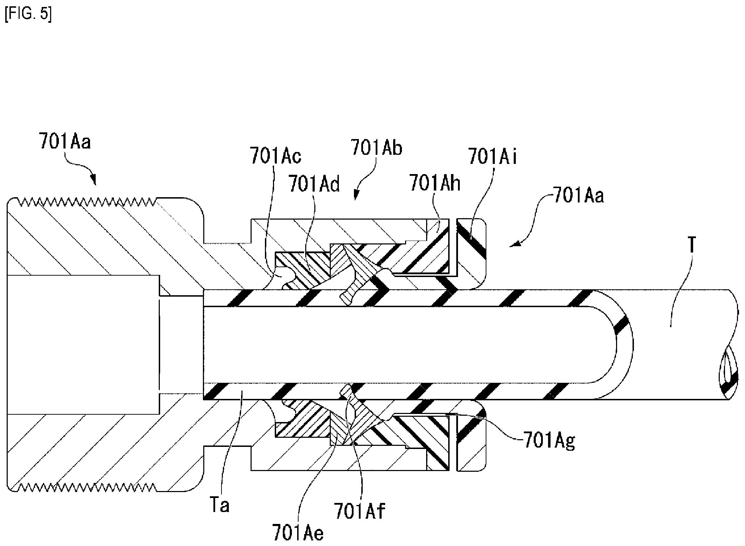

FIG. 5 is a cross-sectional view illustrating an example of a configuration of the one-touch joint structure 701A provided in the gas discharge portion 218A of FIG. 3. As illustrated in the drawing, the one-touch joint structure 701A includes a joint body 701Aa fixed to the housing 210 and a tube connection portion 701Ab to which a tube member T constituting the flow path 3c is detachably connected. The tube connection portion 701Ab includes a recess 701Ac provided on one end side in the axial direction of the joint body 701Aa, a seal member 701Ad accommodated in the recess 701Ac, a backing ring 701Ae and a locking ring 701Af accommodated in the recess 701Ac and disposed on the tube insertion port side relative to the seal member 701Ad, a tube insertion port 701Ag, a collar 701Ah attached to the tube insertion port 701Ag, and an open sleeve 701Ai.

The tube member T is very easily attached and detached. At the time of attaching the tube member T, an end portion Ta of the tube member T is inserted into the one-touch joint structure 701A to a deepest portion of the recess 701Ac, so that the tube member T and the locking ring 701Af are fitted to each other, and the tube member T is fixed to the one-touch joint structure 701A. At the time of removal of the tube member T, the open sleeve 701Ai is pushed toward the joint body 701Aa along the axial direction of the joint body 701Aa, so that the locking ring 701Af is released from the tube member T and the tube member T is pulled out from the one-touch joint structure 701A. In the present embodiment, the one-touch joint structure refers to a structure in which attachment or detachment of the tube member and the joint can be performed by one operation, and is a structure in which, for example, the tube member and the joint can be easily attached and detached by an operation of moving the tube member and a connection side member in one direction such as the axial direction.

The one-touch joint structure 701A of the present embodiment is not limited to the configuration illustrated in FIG. 5. The one-touch joint structure 701A may include a fixing portion fixed to the housing and a tube connection portion to which the tube member is detachably connected, and may have a structure in which the tube member and the tube connection portion are coupled in the sealed state when the tube is attached. The one-touch joint structure 701A illustrated in FIG. 5 can be replaced with a luer fitting structure to be described below, and the one-touch joint structure and the luer fitting structure to be described below can be used in combination in the hollow fiber deaeration module 20A.

In the production method of the hollow fiber deaeration module 20A, for example, the hollow fiber membrane bundle 22 is formed by bundling a predetermined number of hollow fibers. At this time, an outer support body 234 may be used to cover the hollow fiber membrane bundle 22 with the outer support body 234. Further, the gas discharge port 218Aa is provided in the peripheral wall of the cylindrical body, and a screw portion and/or an O-ring groove unit is provided at both axial end portions of the cylindrical body as necessary to form the cylindrical body 211. In a state where the hollow fiber membrane bundle 22 is accommodated in the cylindrical body 211, one axial end portion 211a of the cylindrical body 211 and one longitudinal end portion 22a of the hollow fiber membrane bundle 22 are fixed with a sealing material to form the first sealing portion 231A, and further, the other axial end portion 211b of the cylindrical body 211 and the other longitudinal end portion 22b of the hollow fiber membrane bundle 22 are fixed with a sealing material to form the second sealing portion 232A. Thereafter, the end surfaces of the first sealing portion 231A and the second sealing portion 232A are cut. Moreover, the first lid unit 212A is attached to the one axial end portion 211a of the cylindrical body 211, and the second lid unit 213A is attached to the other axial end portion 211b of the cylindrical body 211, respectively, to form the housing 210. Finally, the one-touch joint structures 701A and 701A are fixed to the gas discharge ports 218Aa and 218Aa of the cylindrical body 211 by screwing or bonding. Accordingly, the hollow fiber deaeration module 20A including the housing 210 and the hollow fiber membrane 220 is produced.

As described above, according to the present embodiment, in the hollow fiber deaeration module 20A, the housing 210 includes the gas discharge portion 218A for connecting the internal space S1 of the housing 210 and the outside of the housing 210 to each other and for depressurizing the internal space S1 of the housing 210, and the gas discharge portion 218A has the one-touch joint structure 701A that connects the housing 210 and the tube member to each other, so that the water liquefied in the internal space S1 easily flows into the gas discharge portion 218A by gravity and is discharged from the gas discharge portion 218A to the outside. Accordingly, it becomes difficult for water to accumulate in the internal space S1 or the gas discharge portion 218A of the housing 210, and it is possible to maintain original good deaeration performance even after a long time of continuous use. In addition, since the humidity of the internal space S1 or the gas discharge portion 218A of the housing 210 can be kept low, bacteria and the like are less likely to be generated even when the internal space S1 or the gas discharge portion 218A are opened after operation, and the proliferation of bacteria and the like in the internal space S1 or the gas discharge portion 218A of the housing 210 can be suppressed. In addition, since the tube member is easily removed by the one-touch joint structure 701A, no excessive stress is applied to the one-touch joint structure 701A when water accumulated in the internal space S1 or the gas discharge portion 218A is periodically taken out, and tensile fatigue fracture at a connection portion between the housing 210 and the one-touch joint structure 701A can be prevented. In addition, even when the tube member is inserted into the one-touch joint structure 701A, compression fatigue fracture and bending fatigue fracture can be prevented by easy attachment of the tube member. Thus, deterioration of the connection portion of the housing 210 with the one-touch joint structure 701A is suppressed to prevent gas leakage, and the original performance of the hollow fiber deaeration module 20A can be maintained for a long period of time. As compared with a known hose nipple joint, an inner peripheral surface of the tube member is not scraped due to friction between the one-touch joint structure 701A and the tube member, and mixing of dust (particles) and the like can be prevented for a long period of time by maintaining good sealability between the one-touch joint structure 701A and the tube.

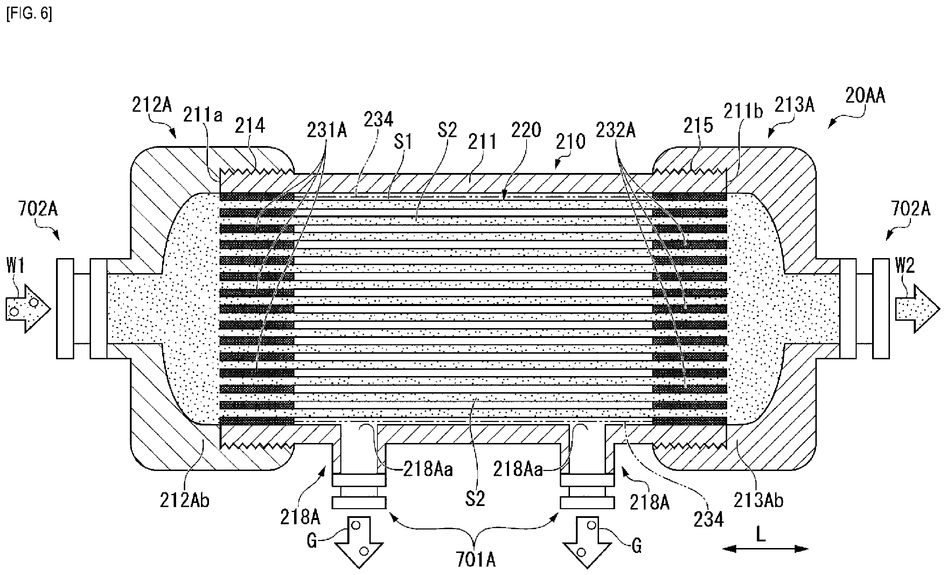

FIG. 6 is a view illustrating a modification of the internal perfusion type hollow fiber deaeration module 20A of FIG. 3. The hollow fiber deaeration module 20AA illustrated in FIG. 6 is different from the internal perfusion type hollow fiber deaeration module 20A illustrated in FIG. 3 in that one-touch joint structures 702A and 702A for connecting the housing 210 and the tube member to each other are provided in the liquid supply portion 216A and the liquid discharge portion 217A, respectively. Also in the present modification, the one-touch joint structure 702A can be replaced with the luer fitting structure to be described below, and the one-touch joint structure and the luer fitting structure to be described below can be used in combination in the hollow fiber deaeration module 20AA.

According to the present modification, by providing the one-touch joint structures 702A and 702A also in the liquid supply portion 216A and the liquid discharge portion 217A, the inner peripheral surface of the tube member is not scraped by friction between the one-touch joint structure 702A and the tube member, and it is possible to prevent mixing of dust (particles) and the like on a liquid side, that is, a constant-temperature water side for a long period of time, as compared with the known hose nipple. In addition, since the tube member is easily attached and detached by the one-touch joint structures 702A and 702A, it is possible to prevent fatigue fracture at the connection portion between the housing 210 and the one-touch joint structure 702A, and it is possible to prevent water leakage from the portion.

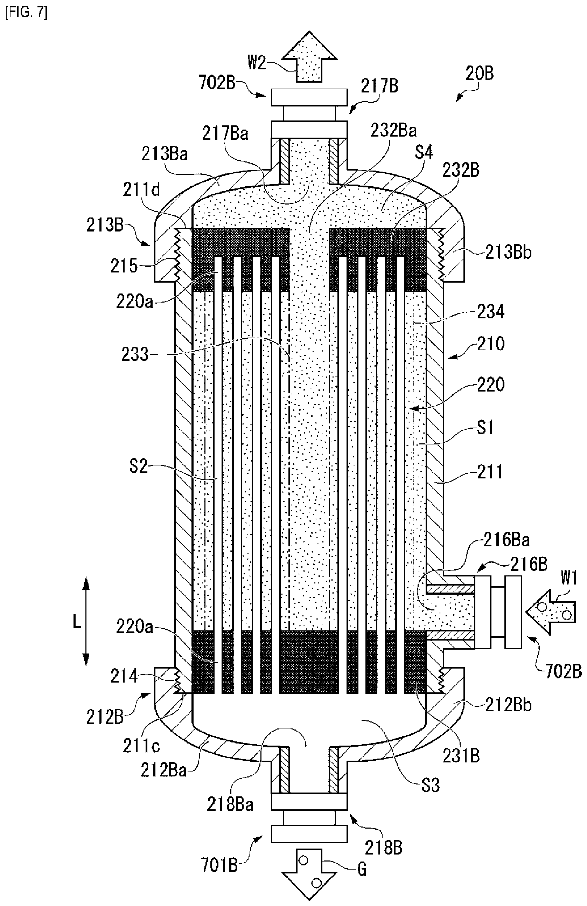

FIG. 7 is a view illustrating an external perfusion type hollow fiber deaeration module. The chemical analysis device 2A may include an external reflux type hollow fiber deaeration module 20B instead of the internal reflux type hollow fiber deaeration module illustrated in FIG. 3. In the hollow fiber deaeration module 20B, the constant-temperature water W1 is supplied to the outer side of the hollow fiber membrane 220, and the inner side of the hollow fiber membrane 220 is depressurized to deaerate the constant-temperature water W1, and thus to generate the deaerated constant-temperature water W2.

The hollow fiber deaeration module 20B includes the housing 210 and the hollow fiber membrane 220 disposed in the internal space S1 of the housing 210. The housing 210 includes the cylindrical body 211 disposed such that the axial direction L is substantially vertical, a third lid unit 212B attached to an axially lower end portion 211c of the cylindrical body 211, and a fourth lid unit 213B attached to an axially upper end portion 211d of the cylindrical body 211.

The cylindrical body 211 has the internal space S1, and the hollow fiber membrane 220 is accommodated in the internal space S1. The cylindrical body 211 has, for example, a cylindrical shape extending in the axial direction L, and both end portions of the cylindrical body 211 are open. In the present embodiment, the cylindrical body 211 includes the first screw portion 214 where the cylindrical body 211 and the third lid unit 212B are screwed together, and the second screw portion 215 where the cylindrical body 211 and the fourth lid unit 213B are screwed together. The third lid unit 212B and the fourth lid unit 213B are fixed to the cylindrical body 211 by the first screw portion 214 and the second screw portion 215, respectively.

The attachment of the third lid unit 212B and the fourth lid unit 213B to the cylindrical body 211 is not limited to screwing, and can be performed by fitting, bonding, welding, or the like. Either or both of the third lid unit 212B and the fourth lid unit 213B may be detachably attached to the cylindrical body 211. A sealing unit (not illustrated) such as an O-ring may be provided at the attachment unit of the third lid unit 212B and the fourth lid unit 213B with respect to the cylindrical body 211. When the sealing unit is formed of an O-ring, it is preferable that the O-ring be disposed in an annular groove unit or the like formed in the axially lower end portion 211c or the axially upper end portion 211d of the cylindrical body 211. The sealing unit can prevent liquid leakage that may occur between the cylindrical body 211 and the third lid unit 212B or the fourth lid unit 213B. Since the sealing unit does not always come into contact with liquid, the material of the sealing unit is not particularly limited within a range in which the above-described effect can be obtained. From the viewpoint of stain resistance, preferable materials for the sealing unit include polyolefin resins such as a polypropylene resin, the above-described fluororesins, or aromatic polyester resins such as a polycarbonate resin or polyethylene terephthalate.

The third lid unit 212B may include a first wall portion 212Ba having a substantially disc shape provided perpendicularly to the axial direction L, and a second wall portion 212Bb having a substantially ring shape extending parallel to the axial direction L from the peripheral edge of the first wall portion 212Ba. The third lid unit 212B is fixed to the cylindrical body 211 by engaging the inner peripheral surface of the third lid unit 212B with the outer peripheral surface of the cylindrical body 211.

The fourth lid unit 213B may include a first wall portion 213Ba having a substantially disc shape provided perpendicularly to the axial direction L, and a second wall portion 213Bb having a substantially ring shape extending parallel to the axial direction L from the peripheral edge of the first wall portion 213Ba. The fourth lid unit 213B is fixed to the cylindrical body 211 by engaging the inner peripheral surface of the fourth lid unit 213B with the outer peripheral surface of the cylindrical body 211.

The housing 210 includes a liquid supply portion (second liquid supply portion) 216B for connecting the outside of the housing 210 and the internal space S1 of the housing 210 to each other, and for supplying the constant-temperature water W1 from the outside of the housing 210 to the internal space S1 of the housing 210. In the present embodiment, the liquid supply portion 216B is provided in the cylindrical body 211. The liquid supply portion 216B includes a liquid supply port 216Ba that is formed, for example, in the cylindrical body 211, for supplying the constant-temperature water W1 into the cylindrical body 211. The liquid supply port is not particularly limited, and is a circular opening in a side view formed at the axially lower end portion 211c of the cylindrical body 211 or the vicinity thereof. The flow path 3a connected to the deaeration device 3 is connected to the liquid supply port 216Ba. The gas supply unit 216Ba and the flow path 3a are preferably connected by a predetermined structure to be described below. However, the present invention is not limited thereto, and the liquid supply port 216Ba and the flow path 3a may be connected in a form other than the predetermined structure to be described below.

The housing 210 also includes a liquid discharge portion (second liquid discharge portion) 217B for connecting the internal space S1 of the housing 210 and the outside of the housing 210 to each other, and for discharging the constant-temperature water W2 deaerated from the internal space S1 of the housing 210 to the outside of the housing 210. In the present embodiment, the liquid discharge portion 217B is provided in the fourth lid unit 213B. The liquid discharge portion 217B includes a liquid discharge port 217Ba that is formed, for example, on the first wall portion 213Ba of the fourth lid unit 213B, for supplying the constant-temperature water W2 to the outside. The liquid discharge port 217Ba is not particularly limited, and is, for example, a circular opening in a side view formed on the central axis of the cylindrical body 211. The flow path 3b connected to the reaction tank 5 is connected to the liquid discharge port 217Ba. The liquid discharge port 217Ba and the flow path 3b are preferably connected by a predetermined structure to be described below. However, the present invention is not limited thereto, and the liquid discharge port 217Ba and the flow path 3b may be connected in a form other than the predetermined structure to be described below.

Furthermore, the housing 210 includes a gas discharge portion (second gas discharge portion) 218B for connecting the internal space S2 of the hollow fiber membrane 220 and the outside of the housing 210 to each other, and for depressurizing the internal space S2 of the hollow fiber membrane 220. The gas discharge portion 218B includes a gas discharge port 218Ba that is formed, for example, on the first wall portion 212Ba of the third lid unit 212B for discharging the gas G in the internal space S2. In the present embodiment, the gas discharge portion 218B is provided in the third lid unit 212B. The gas discharge portion 218B is preferably provided in the third lid unit 212B. As a result, moisture generated in the internal space S2 of the hollow fiber membrane 220 and/or in the internal space S3 of the third lid unit 212B is discharged to the outside from the hollow fiber membrane 220 via the gas discharge portion 218B. The flow path 3c connected to the vacuum pump 6 is connected to the gas discharge portion 218B. The gas discharge portion 218B and the flow path 3c are connected by a predetermined structure to be described below.

The housing 210 also includes a central pipe 233 disposed on the inside of the cylindrical body 211 to be parallel to the axial direction of the cylindrical body 211, and the outer support body 234 substantially coaxial with the central pipe 233 and disposed between the cylindrical body 211 and the central pipe 233. The central pipe 233, the outer support body 234, and the cylindrical body 211 are arranged in this order from the center toward the outer side in the radial direction of the housing 210. A hollow fiber membrane bundle 22 is disposed between the central pipe 233 and the outer support body 234.

The materials for the cylindrical body 211, the third lid unit 212B, and the fourth lid unit 213B constituting the housing 210 and the material for the hollow fiber membrane 220 may be the same as those of the internal perfusion type hollow fiber deaeration module 20A.

The hollow fiber membrane bundle 22 can be formed, for example, in a sheet-like article in which the plurality of hollow fiber membranes 220 are bundled in a curtain-like shape using vertical threads. In this case, for example, the hollow fiber deaeration module 20B can be produced by bundling the sheet-like article into a cylindrical shape to form the hollow fiber membrane bundle and fixing both end portions of the hollow fiber membrane bundle bundled into a cylindrical shape with a sealing material. As the material for the vertical thread, the same materials as those of the internal perfusion type hollow fiber deaeration module 20A can be used.

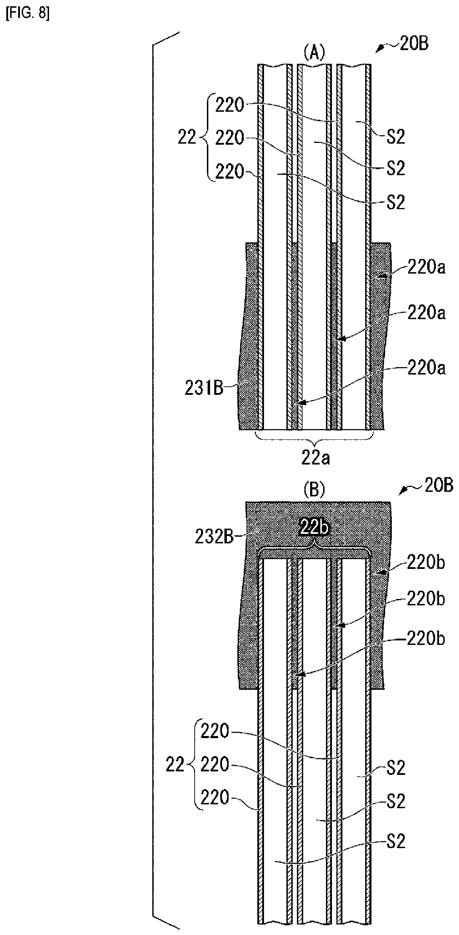

FIG. 8(A) is a partial cross-sectional view illustrating a configuration of the third sealing portion 231B provided at the axially lower end portion 211c of the cylindrical body 211 illustrated in FIG. 7, and FIG. 8(B) is a partial cross-sectional view illustrating a configuration of a fourth sealing portion 232B provided at the axially upper end portion 211d of the cylindrical body 211 illustrated in FIG. 7.
As illustrated in FIGS. 8(A) and 8(B), the hollow fiber deaeration module 20B includes the third sealing portion 231B that seals one axial end portion 211a (refer to FIG. 5) of the cylindrical body 211, and the fourth sealing portion 232B that seals the other axial end portion 211b (refer to FIG. 5) of the cylindrical body 211. One longitudinal end portion 220a of the hollow fiber membrane 220 is fixed to the third sealing portion 231B, and the other longitudinal end portion 220b of the hollow fiber membrane 220 is fixed to the fourth sealing portion 232B. That is, one longitudinal end portion 22a of the hollow fiber membrane bundle 22 is fixed to the third sealing portion 231B, and the other longitudinal end portion 22b is fixed to the fourth sealing portion 232B.

The third sealing portion 231B is filled in the entire region of the hollow fiber membrane 220 other than the internal space S2 in a cross-section perpendicular to the axial direction L of the cylindrical body 211. That is, the third sealing portion 231B is not filled in the internal space S2 of the hollow fiber membrane 220, and is filled between the hollow fiber membranes 220 and between the hollow fiber membrane bundle 22 and the inner wall of the cylindrical body 211.

Similar to the third sealing portion 231B, the fourth sealing portion 232B is filled in the entire region of the hollow fiber membrane 220 other than the internal space S2 in the cross-section perpendicular to the axial direction L of the cylindrical body 211. That is, the fourth sealing portion 232B is not filled in the internal space S2 of the hollow fiber membrane 220, and is filled between the hollow fiber membranes 220 and between the hollow fiber membrane bundle 22 and the inner wall of the cylindrical body 211. The fourth sealing portion 232B is provided with a communication port 232Ba that allows the internal space S1 of the housing 210 and the internal space S4 of the fourth lid unit 213B to communicate with each other. The fourth sealing portion 232B closes the other longitudinal end portion 220b of the hollow fiber membrane 220. Thus, the internal space S2 of the hollow fiber membrane 220 does not communicate with the internal space S4 of the fourth lid unit 213B.

As the material of the third sealing portion 231B and the fourth sealing portion 232B, the same materials as those of the internal perfusion type hollow fiber deaeration module 20A can be used.

In the present embodiment, the third sealing portion 231B seals the axially lower end portion 211c of the cylindrical body 211 in a state where the internal space S3 of the third lid unit 212B and the internal space S2 of the hollow fiber membrane 220 communicate with each other. The fourth sealing portion 232B seals the axially upper end portion 211d of the cylindrical body 211 in a state of closing the internal space S4 of the fourth lid unit 213B and the internal space S2 of the hollow fiber membrane 220. That is, the internal space S3 of the third lid unit 212B and the internal space S1 of the housing 210 are partitioned by the third sealing portion 231B, the internal space S4 of the fourth lid unit 213B and the internal space S1 of the housing 210 communicate with each other, and the internal space S3 of the third lid unit 212B and the internal space S2 of the hollow fiber membrane 220 communicate with each other.

Thus, the constant-temperature water W1 supplied from the liquid supply portion 216B to the internal space S1 of the housing 210 is supplied only to the internal space S4 of the fourth lid unit 213B and prevented from flowing into the internal space S3 of the third lid unit 212B. Since the gas is exhausted from the gas discharge port 218Ba by the vacuum pump 6, the internal space S2 of the hollow fiber membrane 220 is depressurized, preferably to a vacuum. Thus, when the constant-temperature water W1 passes through the internal space S1 of the housing 210, the dissolved gas and air bubbles of the constant-temperature water W1 are drawn into the hollow fiber membrane 220, whereby the constant-temperature water W1 is deaerated.

The deaerated constant-temperature water W2 flows into the internal space S4 of the fourth lid unit 213B from only the internal space S1 of the housing 210, and is supplied from the liquid discharge portion 217B into the reaction tank 5 of the (bio) chemical analysis unit 4A.

As described above, in the hollow fiber deaeration module 20B, the liquid contact portion of the constant-temperature water W1 and W2 is mainly composed of the third sealing portion 231B, the hollow fiber membrane 220, the fourth sealing portion 232B, and the fourth lid unit 213B. By using the above-described preferable material for each unit, which constitutes the liquid contact portion, the chemical resistance can be excellent and the mixing of foreign substances can be suppressed even when used for a long period in the deaeration of the constant-temperature water.

In the present embodiment, the gas discharge portion 218B has a one-touch joint structure 701B that connects the housing 210 and the tube member to each other. The one-touch joint structure 701B is attached to the housing 210 in the sealed state such as airtightness. As a modification of the present embodiment, the second liquid supply portion 216B and the second liquid discharge portion 217B preferably have one-touch joint structures 702B and 702B that connect the housing 210 and the tube member to each other, respectively. The one-touch joint structures 702B and 702B are attached to the housing 210 in the sealed state such as water-blocking properties. The structures of the one-touch joint structures 701B and 702B are similar to that of the one-touch joint structure 701A (FIG. 5). However, the one-touch joint structures 701B and 702B of the present embodiment are not limited to the configuration illustrated in FIG. 5, may include a fixing portion fixed to the housing and a tube connection portion to which the tube member is detachably connected, and may have a structure in which the tube member and the tube connection portion are coupled in the sealed state when the tube is attached.

In the production method of the hollow fiber deaeration module 20B, for example, a sheet-like article in which the plurality of hollow fiber membranes 220 are bundled in a curtain-like shape using vertical threads is wound around the cylindrical central pipe 233 and bundled into a cylindrical shape to form the hollow fiber membrane bundle 22. At this time, the outer support body 234 may be used to cover the hollow fiber membrane bundle 22 with the outer support body 234. Further, the liquid supply port 216Ba is provided in the peripheral wall of the cylindrical body, and a screw portion and/or an O-ring groove unit is provided at both axial end portions of the cylindrical body as necessary to form the cylindrical body 211. In a state where the hollow fiber membrane bundle 22 and the central pipe 233 are accommodated in the cylindrical body 211, the one axial end portion of the cylindrical body 211 and the one longitudinal end portion 22a of the hollow fiber membrane bundle 22 are fixed with a sealing material to form the third sealing portion 231B. Further, the other axial end portion of the cylindrical body 211 and the other longitudinal end portion 22b of the hollow fiber membrane bundle 22 are fixed with a sealing material to form the fourth sealing portion 232B. Thereafter, only the third sealing portion 231B or the end surfaces of the third sealing portion 231B and the fourth sealing portion 232B are cut. Thereafter, the third lid unit 212B is attached to the one axial end portion of the cylindrical body 211 provided with the third sealing portion 231B, and the fourth lid unit 213B is attached to the other axial end portion of the cylindrical body 211 provided with the fourth sealing portion 232B, respectively, to form the housing 210, whereby the hollow fiber deaeration module 20B including the housing 210 and the hollow fiber membrane 220 is produced.

As described above, according to the present embodiment, in the hollow fiber deaeration module 20B, the gas discharge portion 218B for connecting the internal space S2 of the hollow fiber membrane 220 and the outside of the housing 210 to each other, and for depressurizing the internal space S2 of the hollow fiber membrane 220, is provided, and since the gas discharge portion 218B is provided in the housing 210, water liquefied in the internal space S2 is discharged from the gas discharge portion 218B to the outside. Accordingly, it becomes difficult for water to accumulate in the internal space S2 of the hollow fiber membrane 220 and the internal space S3 and the gas discharge portion 218B of the third lid unit 212B, and it is possible to maintain the original good deaerating performance even after a long time of continuous use. In addition, since the humidity of the internal space S2 or the gas discharge portion 218B of the hollow fiber membrane 220 can be kept low, bacteria and the like are less likely to be generated even when the internal space S2 or the gas discharge portion 218B is opened after operation, and the proliferation of bacteria and the like in the internal space S2 of the hollow fiber membrane 220 and the internal space S3 and the gas discharge portion 218B of the third lid unit 212B can be suppressed. In addition, since the tube member is easily removed by the one-touch joint structure 701B, no excessive stress is applied to the one-touch joint structure 701B when water accumulated in the internal space S3 or the gas discharge portion 218B is periodically taken out, and tensile fatigue fracture at a connection portion between the housing 210 and the one-touch joint structure 701B can be prevented. In addition, even when the tube member is inserted into the one-touch joint structure 701B, compression fatigue fracture and bending fatigue fracture can be prevented by easy attachment of the tube member. Thus, deterioration of the connection portion of the housing 210 with the one-touch joint structure 701B is suppressed to prevent gas leakage, and the original performance of the hollow fiber deaeration module 20B can be maintained for a long period of time. As compared with the known hose nipple joint, the inner peripheral surface of the tube is not scraped due to friction between the one-touch joint structure 701B and the tube member, and mixing of dust (particles) and the like can be prevented for a long period of time by maintaining good sealability between the one-touch joint structure 701B and the tube member. In addition, since the tube member is easily attached and detached by the one-touch joint structure 701B, it is possible to prevent fatigue fracture at the connection portion between the housing 210 and the one-touch joint structure 702B, and it is possible to prevent water leakage from the portion.

Also in the present modification, the one-touch joint structures 701B and 702B can be replaced with the luer fitting structure to be described below, and the one-touch joint structure and the luer fitting structure to be described below can be used in combination in the hollow fiber deaeration module 20B.

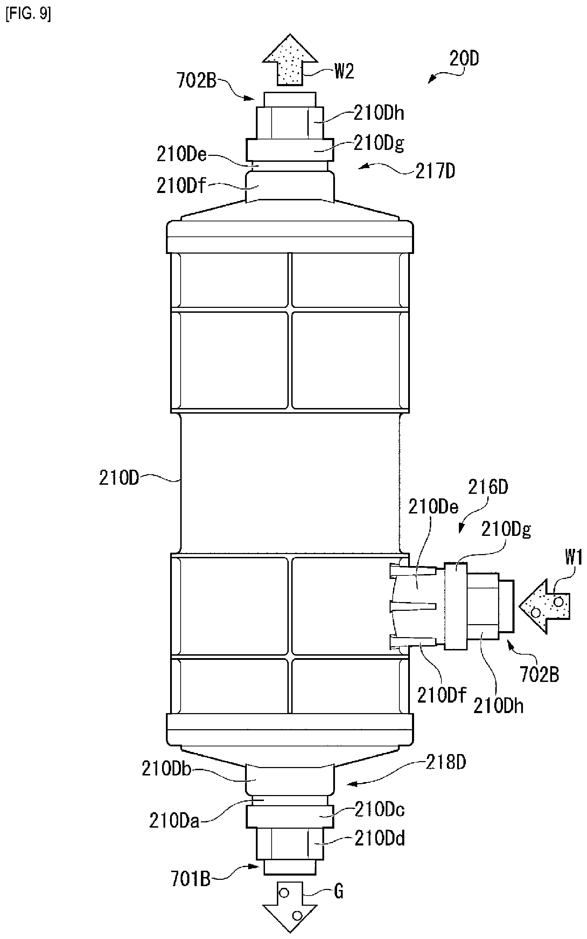

FIG. 9 is a side view illustrating a modification of the hollow fiber deaeration module 20B of FIG. 7. The structure of the hollow fiber deaeration module 20D illustrated in FIG. 9 is basically the same as the structure of the hollow fiber deaeration module 20B except that the structures of the second liquid supply portion 216B, the second liquid discharge portion 217B, and the gas discharge portion 218B are different.
The hollow fiber deaeration module 20D includes a liquid supply portion (second liquid supply portion) 216D, a liquid discharge portion (second liquid discharge portion) 217D, and a gas discharge portion 218D. The hollow fiber deaeration module 20D has the one-touch joint structure 701B that connects the housing 210D and the tube member to each other in the gas discharge portion 218D. The hollow fiber deaeration module 20D has the one-touch joint structures 702B and 702B that connect the housing 210D and the tube member to each other in the liquid supply portion 216D and the liquid discharge portion 217D.

In the present embodiment, in the gas discharge portion 218D, the housing 210D includes an extending portion 210Da which is provided integrally with the housing 210D and extends outward from the housing 210D and to which the one-touch joint structure 701B is attached, and a rib portion 210Db provided at the extending portion 210Da. A metal ring member 210Dc and a nut 210Dd fixed to the ring member 210Dc are arranged at an end of the extending portion 210Da, and the one-touch joint structure 701B is disposed inside the nut 210Dd.

In the liquid supply portion 216D and the liquid discharge portion 217D, the housing 210D includes extending portions 210De and 210De which are provided integrally with the housing 210D and extend outward from the housing 210D and to which the one-touch joint structures 702B and 702B are attached, and rib portions 210Df and 210Df provided at the extending portions 210De and 210De. A metal ring member 210Dg and a nut 210Dh fixed to the ring member 210Dg are arranged at an end of the extending portion 210De, and the one-touch joint structure 701B is disposed inside the nut 210Dh.

According to this configuration, the housing 210D includes the extending portion 210Da which is provided integrally with the housing 210D and extends outward from the housing 210D and to which the one-touch joint structure 701B is attached, and the extending portions 210De and 210De which are provided integrally with the housing 210D and extend outward from the housing 210D and to which the one-touch joint structures 702B and 702B are attached. Therefore, strength of a connection portion between the housing 210D and the one-touch joint structure 701B is improved, fatigue fracture is prevented, and gas leakage and water leakage can be reliably prevented. In addition, since the housing 210D includes the rib portion 210Db provided in the extending portion 210Da and the rib portions 210Df and 210Df provided in the extending portions 210De and 210De, the strength of the extending portions 210Da, 210De, and 210De is further improved, and gas leakage and water leakage can be more reliably prevented.

In the present modification, the extending portion and the rib portion are provided in the hollow fiber deaeration module 20D of the external perfusion type; however, the present invention is not limited thereto, and the extending portion and the rib portion may be provided in the hollow fiber deaeration module 20D of the internal reflux type. For example, an extending portion or a rib portion may be provided in the gas discharge portion 218A, the liquid supply portion 216A, and the liquid discharge portion 217A of the hollow fiber deaeration module 20B illustrated in FIG. 3.

Also in the present modification, the one-touch joint structures 701B and 702B can be replaced with the luer fitting structure to be described below, and the one-touch joint structure and the luer fitting structure to be described below can be used in combination in the hollow fiber deaeration module 20D.

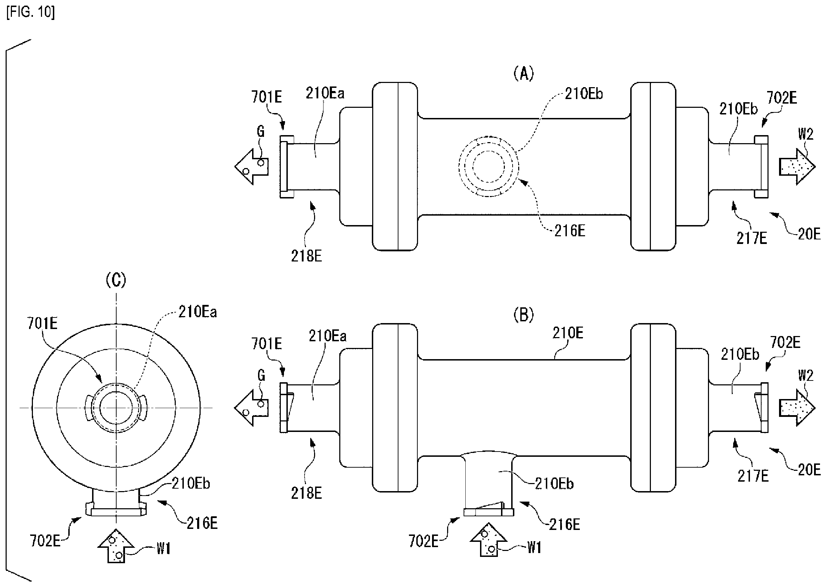

FIG. 10(A) is a top view illustrating another modification of the hollow fiber deaeration module 20B of FIG. 7, FIG. 10(B) is a side view, and FIG. 10(C) is a front view. The structure of the hollow fiber deaeration module 20E illustrated in FIGS. 10(A) to 10(C) is basically the same as the structure of the hollow fiber deaeration module 20B except that the structures of the second liquid supply portion 216B, the second liquid discharge portion 217B, and the gas discharge portion 218B are different.
The hollow fiber deaeration module 20E includes a liquid supply portion (second liquid supply portion) 216E, a liquid discharge portion (second liquid discharge portion) 217E, and a gas discharge portion 218E. The hollow fiber deaeration module 20E has a luer fitting joint structure 701E that connects a housing 210E and the tube member to each other in the gas discharge portion 218E. The hollow fiber deaeration module 20E has luer fitting joint structures 702E and 702E that connect a housing 210E and the tube member to each other in the liquid supply portion 216E and the liquid discharge portion 217E.

In the present embodiment, in the gas discharge portion 218E, the housing 210E includes an extending portion 210Ea provided integrally with the housing 210E, extending outward from the housing 210E, and formed with the luer fitting joint structure 701E. In the liquid supply portion 216E and the liquid discharge portion 217E, the housing 210E includes extending portions 210Eb and 210Eb provided integrally with the housing 210E, extending outward from the housing 210E, and formed with the luer fitting joint structures 702E and 702E. The luer fitting joint structure 701E constitutes, for example, a male terminal of the luer fitting joint structure, and the tube member is fixed to the housing 210E by engaging with a female terminal provided at an end portion of the tube member. The configuration of the luer fitting joint structure 702E is the same as the configuration of the luer fitting joint structure 701E.

The tube member T can be attached and detached very easily as in the case of the one-touch joint structure. At the time of attaching the tube member, the luer fitting joint structure 701E constituting the male terminal is inserted into the end portion of the tube member constituting the female terminal and rotated, so that the male terminal and the female terminal are fitted to each other, and the tube member is fixed to the luer fitting joint structure 701E. At the time of removing the tube member T, the fitting between the male terminal and the female terminal is released by rotating the end portion of the tube member constituting the female terminal in a direction opposite to the attachment direction, and the tube member and the luer fitting joint structure 701E are separated. In the present embodiment, the luer fitting joint structure refers to a structure in which attachment or detachment of the tube member and the joint can be performed by one operation, and is a structure in which, for example, the female terminal to which the tube member is attached can be easily attached and detached by an operation of rotating in one direction such as a circumferential direction around the axis with respect to the male terminal on the housing side.

According to this configuration, the housing 210E includes the extending portion 210Ea which is provided integrally with the housing 210E and extends outward from the housing 210E and to which the luer fitting joint structure 701E is attached, and the extending portions 210Eb and 210Eb which are provided integrally with the housing 210E and extend outward from the housing 210E and to which the luer fitting joint structures 702E and 702E are attached. Therefore, strength of a connection portion between the housing 210E and the luer fitting joint structures 701E and 702E is improved, and gas leakage and water leakage can be reliably prevented.

The housing 210E may have a rib portion provided in the extending portion 210Ea and rib portions provided in the extending portions 210Eb and 210Eb. As a result, the strength of the extending portions 210Ea, 210Eb, and 210Eb is further improved, and gas leakage and water leakage can be more reliably prevented.

In the present modification, the hollow fiber deaeration module 20E of the external perfusion type has the luer fitting joint structure 701E; however, the present invention is not limited thereto, and the hollow fiber deaeration module of the internal perfusion type may have the luer fitting joint structure 701E. For example, the hollow fiber deaeration module 20B of FIG. 3 may have the luer fitting joint structure in the gas discharge portion 218A, the liquid supply portion 216A, and the liquid discharge portion 217A.

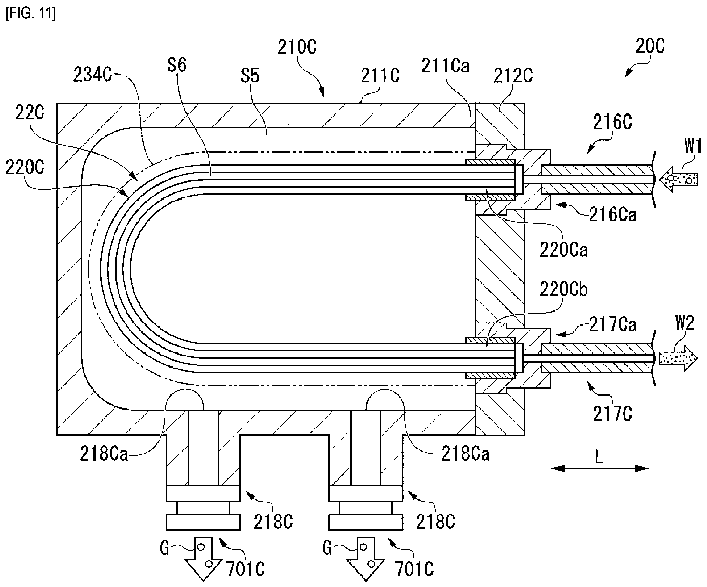

FIG. 11 is a view illustrating a modification of the hollow fiber deaeration module 20A of FIG. 3.
As illustrated in FIG. 11, a hollow fiber deaeration module 20C includes a housing 210C and a hollow fiber membrane 220C disposed in an internal space S5 of the housing 210C. The housing 210C includes a cylindrical body 211C disposed such that the longitudinal direction L is substantially horizontal, and a lid unit 212C attached to one longitudinal end portion 211Ca of the cylindrical body 211C.

The housing 210C includes a liquid supply portion (first liquid supply portion) 216C for connecting the outside of the housing 210C and the internal space S5 of the hollow fiber membrane 220C to each other, and for supplying the constant-temperature water W1 from the outside of the housing 210C to the inside of the hollow fiber membrane 220C. The liquid supply portion 216C includes a first connector portion 216Ca that is formed, for example, on the lid unit 212C, for supplying the constant-temperature water W1 into the lid unit 212C. One longitudinal end portion 220Ca of the hollow fiber membrane 220C is fixed to the first connector portion 216Ca.

The housing 210C includes a liquid discharge portion (first liquid discharge portion) 217C for connecting the internal space S6 of the hollow fiber membrane 220C and the outside of the housing 210C to each other, and for discharging the constant-temperature water W2 deaerated from the internal space S5 of the hollow fiber membrane 220C to the outside of the housing 210C. The liquid discharge portion 217C includes a second connector portion 217Ca that is formed, for example, on the lid unit 212C, for supplying the constant-temperature water W1 into the lid unit 212C. The other longitudinal end portion 220Cb of the hollow fiber membrane 220C is fixed to the second connector portion 217Ca. The housing 210C may include an outer support body 234C covering a hollow fiber membrane bundle 22C composed of the hollow fiber membranes 220C.

The housing 210C also includes a gas discharge portion (first gas discharge portion) 218C for connecting the internal space S5 of the housing 210C and the outside of the housing 210C to each other, and for depressurizing the internal space S5 of the housing 210C. The gas discharge portion 218C includes a gas discharge port 218Ca that is formed, for example, in the cylindrical body 211C for discharging the gas G in the internal space S5. The gas discharge portion 218C is provided in the housing 210C. When the cylindrical body 211C has a cylindrical shape disposed such that the longitudinal direction L is parallel to the horizontal direction, the gas discharge portion 218C is preferably provided on the peripheral wall of the cylindrical body 211.

In this configuration, the gas discharge portions 218C and 218C have one-touch joint structures 701C and 701C that connect the housing 210C and the tube member to each other. The one-touch joint structures 701C and 701C are attached to the housing 210C in the sealed state such as airtightness. Also in the present modification, the one-touch joint structure can be replaced with the luer fitting joint structure, and the one-touch joint structure and the luer fitting structure can be used in combination in the hollow fiber deaeration module 20C.

According to the present configuration, it becomes difficult for water to accumulate in the internal space S5 or the gas discharge portion 218C of the housing 210C, and it is possible to maintain the original good deaeration performance even after a long time of continuous use. In addition, since the humidity of the internal space S5 or the gas discharge portion 218C of the housing 210C can be kept low, bacteria and the like are less likely to be generated even when the internal space S5 or the gas discharge portion 218C is opened after operation, and the proliferation of bacteria and the like in the internal space S5 or the gas discharge portion 218C of the housing 210C can be suppressed.

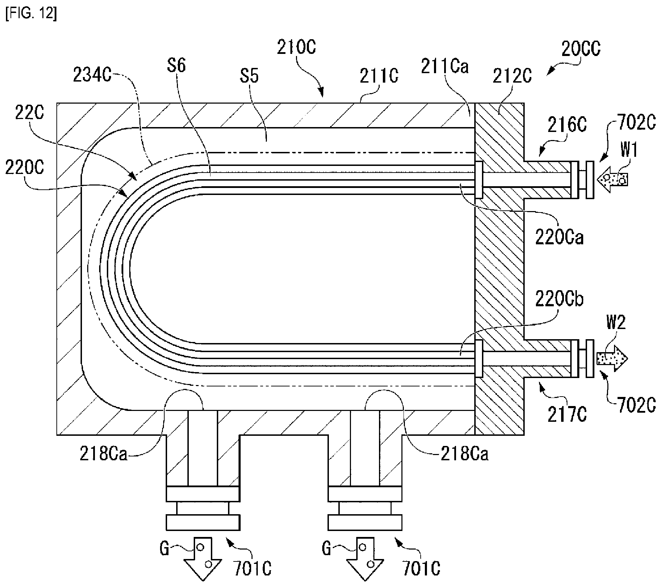

FIG. 12 is a view illustrating another modification of the internal perfusion type hollow fiber deaeration module of FIG. 3. The hollow fiber deaeration module 20C illustrated in FIG. 12 is different from the internal perfusion type hollow fiber deaeration module 20C illustrated in FIG. 11 in that one-touch joint structures 702C and 702C for connecting the housing 210C and the tube member to each other are provided in the liquid supply portion 216C and the liquid discharge portion 217C, respectively. Also in the present modification, the one-touch joint structure can be replaced with the luer fitting joint structure, and the one-touch joint structure and the luer fitting structure can be used in combination in the hollow fiber deaeration module 20C.

According to this configuration, by providing the one-touch joint structures 702C and 702C also in the liquid supply portion 216C and the liquid discharge portion 217C, the inner peripheral surface of the tube member is not scraped by friction between the one-touch joint structure 702C and the tube member, and it is possible to prevent mixing of dust (particles) and the like on the liquid side, that is, the constant-temperature water side for a long period of time, as compared with the known hose nipple. In addition, since the tube member is easily attached and detached by the one-touch joint structures 702C and 702C, it is possible to prevent fatigue fracture at the connection portion between the housing 210C and the one-touch joint structure 702C, and it is possible to prevent water leakage from the portion.

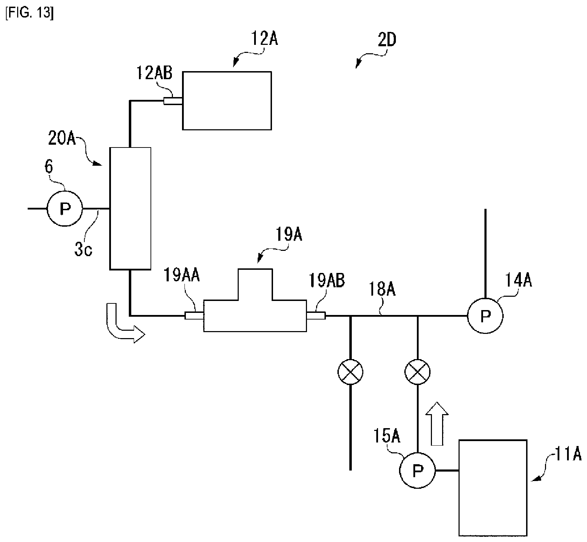

FIG. 13 is a block diagram illustrating a modification of the chemical analysis device 2A illustrated in FIG. 1. The chemical analysis device 2D illustrated in FIG. 13 is different from the chemical analysis device 2A in that the chemical analysis device 2D does not have a circulation path and has an in-liquid fine particle meter.
As illustrated in FIG. 13, the chemical analysis device 2D includes the water supply tank 11A, the constant-temperature tank 12A, and the hollow fiber deaeration module 20A. The water supply tank 11A and the constant-temperature tank 12A are connected to each other via a flow path 18A, and the liquid feeding pump 14A is provided in the flow path 18A. The water supply tank 11A is connected to the flow path 18A via the water supply pump 15A. A discharge pipe 12AB is attached to the liquid discharge side of the constant-temperature tank 12A. The hollow fiber deaeration module 20A is provided in the flow path 18A, and further the vacuum pump 6 is connected via the flow path 3c. An in-liquid fine particle meter 19A is disposed on the downstream side of the hollow fiber deaeration module 20A in the flow path 18A, a supply pipe 19AA is attached to the liquid supply side of the in-liquid fine particle meter 19A, and a discharge pipe 19AB is attached to the liquid discharge side thereof. In the present embodiment, pure water heated to a predetermined temperature in the constant-temperature tank 12A is supplied to the hollow fiber deaeration module 20A by the operation of the liquid feeding pump 14A. The dissolved oxygen and air bubbles of the pure water supplied to the hollow fiber deaeration module 20A are removed by the operation of the vacuum pump 6. The pure water is supplied from the water supply tank 11A to the flow path 13A by the operation of the water supply pump 15A. The pure water discharged from the hollow fiber deaeration module 20A is supplied to the in-liquid fine particle meter 19A, and the fine particles in the pure water are measured by the in-liquid fine particle meter 19A. As described above, the hollow fiber deaeration module 20A may be provided in the chemical analysis device 2D. In place of the hollow fiber deaeration module 20A, hollow fiber deaeration modules 20B, 20C, 20D, and 20E may be provided in the chemical analysis device 2D.

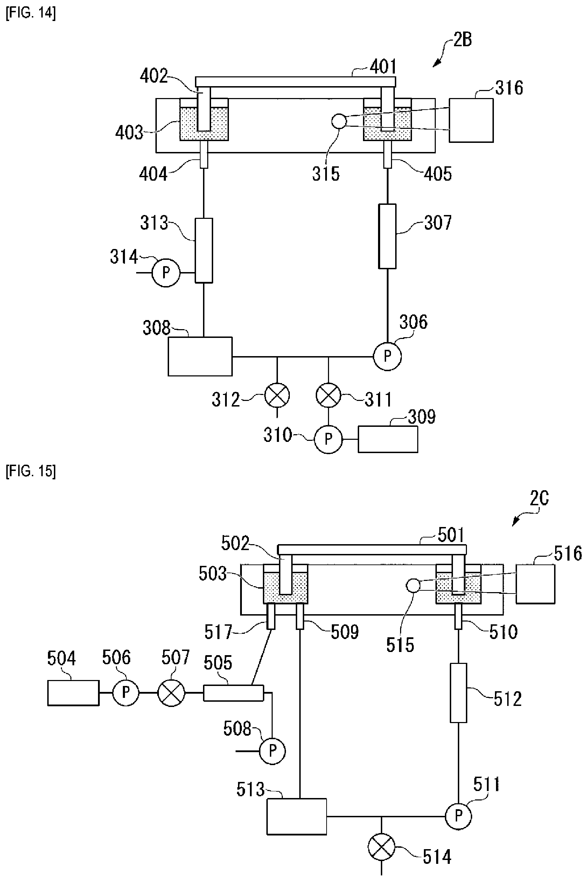

FIG. 14 is a block diagram schematically illustrating another modification of the chemical analysis device 2A illustrated in FIG. 1.
As illustrated in FIG. 14, a chemical analysis device 2B includes a reaction disk 401, a reaction container 402, a reaction tank 403, and a circulation pump 306. The reaction container 402 attached to the circumference of the circular reaction disk 401 is immersed in the liquid maintained in the similarly circular reaction tank 403. The liquid in the reaction tank 403 is constantly circulated by the circulation pump 306 installed between a discharge pipe 404 and a supply pipe 405, and the temperature of the liquid is controlled by the on/off control of a heater 307. A path including the circulation pump 306 and the heater 307 between the discharge pipe 404 and the supply pipe 405 constitutes a hot water circulation path. Accordingly, the reaction solution maintained inside the reaction container 402 is maintained at an optimal temperature (for example, 37°C) for the reaction.

The hot water circulation flow path may be provided with a cooling unit 308 for cooling the constant-temperature water when the temperature of the constant-temperature water in the reaction tank 403 becomes too high. A water supply tank 309 and a water supply pump 310 are connected to the hot water circulation flow path, and the supply of pure water from the water supply tank 309 is controlled by the water supply pump 310 and a water supply valve 311. Further, a waste liquid valve 312 is provided in the hot water circulation flow path, and the constant-temperature water is discharged as waste liquid to the outside of the flow path when the high temperature water circulating in the reaction tank 403 is exchanged. Further, in the hot water circulation flow path, a deaeration device 313 having the hollow fiber deaeration module 20A or 20B is provided, and the dissolved gas in the constant-temperature water supplied into the deaeration device 313 is deaerated by the operation of a vacuum pump 314.

In the chemical analysis device 2B, the reaction solution obtained by mixing the sample and the reagent maintained in the reaction container 402 passes through the bundle of light emitted from the light source lamp 315, and the transmitted light is measured by the multi-wavelength photometer 316 to perform qualitative and quantitative analysis of the specific component in the sample.

FIG. 15 is a block diagram schematically illustrating another modification of the chemical analysis system of FIG. 1. As illustrated in FIG. 15, a chemical analysis device 2C includes a reaction disk 501, a reaction container 502, a reaction tank 503, a water supply tank 504, and a water supply pump 506. The reaction container 502 attached to the circumference of the circular reaction disk 501 is immersed in the constant-temperature water maintained in the similarly circular reaction tank 503. The reaction tank 503 is supplied with the constant-temperature water from the water supply tank 504. A deaeration device 505 having the hollow fiber deaeration module 20A or 20B is provided on the flow path between the water supply tank 504 and the reaction tank 503, and the supply of the constant-temperature water is controlled by the water supply pump 506 and the water supply valve 507. The dissolved gas in the constant-temperature water supplied into the deaeration device 505 is deaerated by the operation of a vacuum pump 508 and supplied from a supply pipe 517 to the reaction tank 503.

On the other hand, the constant-temperature water in the reaction tank 503 is constantly circulated by a circulation pump 511 installed between a discharge pipe 509 and a supply pipe 510, and the temperature of the constant-temperature water is controlled by the on/off control of a heater 512. A path including the circulation pump 511 and the heater 512 between the discharge pipe 509 and the supply pipe 510 constitutes a hot water circulation path. Accordingly, the reaction solution maintained inside the reaction container 502 is maintained at an optimal temperature (for example, 37°C) for the reaction.

The hot water circulation flow path may be provided with a cooling unit 513 for cooling the constant-temperature water when the temperature of the constant-temperature water in the reaction tank 503 becomes too high. In addition, a waste liquid valve 514 is provided in the hot water circulation flow path, and the constant-temperature water is discharged as waste liquid to the outside of the flow path when the constant-temperature water circulating in the reaction tank 503 is exchanged.

In the chemical analysis system, the reaction solution obtained by mixing the sample and the reagent maintained in the reaction container 502 passes through the bundle of light emitted from the light source lamp 515, and the transmitted light is measured by the multi-wavelength photometer 516 to perform qualitative and quantitative analysis of the specific component in the sample.

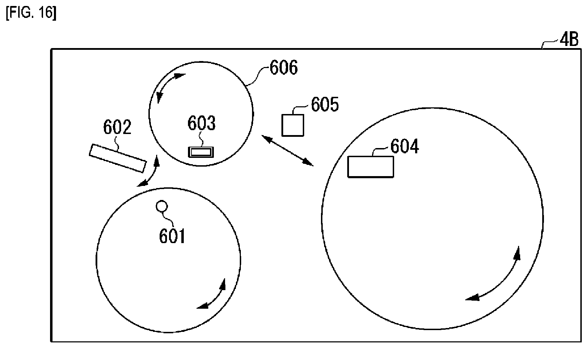

FIG. 16 is a block diagram schematically illustrating a modification of the (bio) chemical analysis unit 4A illustrated in FIG. 1.
As illustrated in FIG. 16, a (bio) chemical analysis unit 4B may include a specimen container 601, a specimen dispensing mechanism 602, a reaction container 603, a reagent container 604, and a reagent dispensing mechanism 605. In the (bio) chemical analysis unit 4B, for example, the specimen sent from the specimen container 601 to the reaction container 603 via the specimen dispensing mechanism 602, and the reagent sent from the reagent container 604 to the reaction container 603 via the reagent dispensing mechanism 605 can be mixed and stirred. The reaction container 603 is kept at a constant temperature by the constant-temperature water stored in a reaction tank 606. On a flow path for supplying the constant-temperature water to the reaction tank 606, a deaeration device (not illustrated) including the hollow fiber deaeration module 20A or 20B is provided, and the supply of the constant-temperature water is controlled.

The chemical analysis device of the above-described embodiment may include a control unit (not illustrated) configured with an information processing device or the like including a CPU, memory, I/O, a microcomputer, a latch, and the like, and automatic analysis and diagnosis programs and data stored in the memory. By using those, information necessary for the operation of the chemical analysis device and the analysis operation thereof can be processed or integrally controlled by the CPU.

### EXAMPLES

Examples of the present invention will be described below. The present invention is not limited to the following Examples.

### Production of Hollow Fiber Deaeration Module

A plurality of internal perfusion type hollow fiber deaeration modules having the same structure as the hollow fiber deaeration module of FIG. 3 or a plurality of external perfusion type hollow fiber deaeration modules having the same structure as the hollow fiber deaeration module of FIG. 7 were produced. In each hollow fiber deaeration module, as the joint structure in the liquid supply portion/gas supply portion and the gas discharge portion, the structure shown in Table 2 was used, and connection forms between the housing and the joint structure in the liquid supply portion/gas supply portion and the gas discharge portion were as shown in Table 1.
The material of the hollow fiber in each hollow fiber deaeration module, the model of the hollow fiber deaeration module, the name of the manufacturer, the perfusion system, and the connection form between the housing and the joint structure are shown in Table 1. In Table 1, the term "screwing" refers to a configuration in which a male screw on the joint structure side is screwed into a female screw on the housing side, and the term "welding" refers to a configuration in which the joint structure (for example, a hose nipple portion) is joined to the housing by melting of a resin. The term "screwing (with rib)" refers to a configuration in which the male screw on the joint structure side is screwed into the female screw provided in a ribbed extending portion on the housing side. In Table 2, the term "luer fit (PP)" refers to the luer fitting joint structure made of polypropylene, the term "one-touch" refers to the one-touch joint structure, "hose nipple (PP)" refers to a hose nipple joint structure made of polypropylene, and "hose nipple (metal)" refers to the hose nipple joint structure made of metal.

### Example 1

An internal reflux type hollow fiber deaeration module A was prepared in which the joint structure in the liquid supply portion/gas supply portion and the gas discharge portion was the luer fitting joint structure, and the connection form between the housing in the liquid supply portion/gas supply portion and the gas discharge portion and the joint structure was screwing.

### Examples 2 to 10

Inner reflux type/external perfusion type hollow fiber deaeration modules E to H were prepared in the same manner as in Example 1 except that the joint structure in the liquid supply portion/gas supply portion and the gas discharge portion and the connection form between the housing and the joint structure in the liquid supply portion/gas supply portion and the gas discharge portion were changed to those shown in Tables 1 and 2.

### Comparative Examples 1 to 10

Inner reflux type/external perfusion type hollow fiber deaeration modules A to H were prepared in the same manner as in Example 1 except that the joint structure in the liquid supply portion/gas supply portion and the gas discharge portion and the connection form between the housing and the joint structure in the liquid supply portion/gas supply portion and the gas discharge portion were changed to those shown in Tables 1 and 2.

### Test Method 1: One-month Evaluation of 5°C Storage Durability Test

(1) In a constant temperature dryer ("OF-600S" available from AS ONE Corporation, 5°C), by using a chemical analysis device having the same configuration as the chemical analysis device illustrated in FIG. 1, the hollow fiber deaeration modules of the respective Examples and Comparative Examples were connected with the joint structure of Table 2 and installed, pure water was circulated (flow rate: 500 mL/min), and a vacuum pump ("DAP-6D" available from ULVAC, Inc., 10 kPa (abs)) was operated to perform deaeration for 22 hours.
   In the connection between the joint structure and the tube member, in the luer fitting joint structure, the female terminal on the tube member side was rotated while being inserted into the male terminal on the housing side, and was attached and fixed. In addition, the female terminal on the tube member side was rotated in the reverse direction and removed. In the one-touch joint structure, the tube member is inserted into and attached and fixed to the one-touch joint structure. An open sleeve was pressed in the axial direction to remove the tube member. In the hose nipple joint structure, the tube member was screwed into the hose nipple joint structure and attached and fixed with a hose band (metal ring). The hose band (metal ring) was removed, and the tube member was removed from the hose nipple joint while being twisted.
(2) Thereafter, the pure water circulation and the vacuum pump were stopped, hypochlorous acid was added (concentration: 500 ppm) to the water supply tank containing the pure water with a syringe, and while the pure water was circulated again under the same conditions as in (1), the vacuum pump was operated for 30 minutes for cleaning.
(3) After cleaning, the pure water circulation and the vacuum pump were stopped, the tube was removed from the joint, the deaeration module was separated, and then the pure water accumulated in the vacuum unit was removed.
(4) All the pure water in the circulation path and the water supply tank was replaced with new pure water.

The operations (1) to (4) were performed as 1 cycle in 24 hours, and continued for 1 month, and then a leak test, observation of dust generated from the tube member, and observation of a joint state were performed. The results are presented in Table 2.

### Leakage Test

Water passed through a liquid phase of the removed hollow fiber module, and presence or absence of leakage was visually confirmed. When there was leakage at any one location, it was determined to be "Present", and the other cases were determined as "Absent".

### Observation of Dust Generated from Tube Member

Using a chemical analysis device having the same configuration as that of the chemical analysis device illustrated in FIG. 13, the number of fine particles (fine particle size: 0.1 µm or more) in the liquid was confirmed at a flow rate of 500 mL/min with an in-liquid fine particle meter available from Rion Co., Ltd.

| | |
|---|---|
| ○ | Less than 1000 |
| Δ | 1000 or more and less than 10000 |
| × | 10000 or more |

### Strength Evaluation of Joint Structure

A state after being pushed into a joint portion (central portion) at 1000 N from a direction perpendicular to the axial direction of each joint structure by a load measuring device (available from IMADA Co., Ltd., device name "FORCE MEASUREMENT MX2") was evaluated according to the following criteria. The results are presented in Table 2.

| | |
|---|---|
| ○ | No change |
| Δ | Wobble is observed |
| × | Breakage/damage was observed |

**[Table 1]**

| Symbol | Hollow fiber deaeration module | Manufacturer | Perfusion system | Hollow fiber material | Connection form between housing and joint structure | |
|---|---|---|---|---|---|---|
| | | | | | Liquid supply portion/liquid discharge portion | Gas discharge portion |
| A | P02-PC2×7N2S | Cobetter | Internal perfusion | PP | Screwing | Screwing |
| B | M60-4500×100-F | NAGAYANAGI | Internal perfusion | Silicone | Welding | Welding |
| C | M60-4500×100-C | NAGAYANAGI | External perfusion | Silicone | Welding | Welding |
| D | ERC-600W | IDEX | Internal perfusion | Silicone | Screwing | Screwing |
| E | PF-001D | DIC | Internal perfusion | PMP | Screwing (with rib) | Screwing (with rib) |
| F | EF-AG2 | DIC | External perfusion | PMP | Screwing (with rib) | Screwing (with rib) |
| G | EF-AG3 | DIC | External perfusion | PMP | Screwing (with rib) | Screwing (with rib) |
| H | EF-AG5 | DIC | External perfusion | PMP | Screwing (with rib) | Screwing (with rib) |

**[Table 2]**

| | | | | | One-month evaluation result of 5°C storage durability test (n3) | | | | |
|---|---|---|---|---|---|---|---|---|---|
| | | Joint structure | | | Leakage | Tube | Joint strength | | |
| | Hollow fiber deaeration module | Liquid supply portion | Liquid discharge portion | Gas discharge portion | Presence or absence | Dust | Liquid supply portion | Liquid discharge portion | Gas discharge portion |
| Example 1 | A | Luer fit (PP) | Luer fit (PP) | Luer fit (PP) | Absence | ○ | ○ | ○ | ○ |
| Example 2 | A | One-touch | One-touch | One-touch | Absence | ○ | ○ | ○ | ○ |
| Example 3 | E | Luer fit | Luer fit | Luer fit | Absence | ○ | ○ | ○ | ○ |
| Example 4 | E | One-touch | One-touch | One-touch | Absence | ○ | ○ | ○ | ○ |
| Example 5 | F | Luer fit | Luer fit | Luer fit | Absence | ○ | ○ | ○ | ○ |
| Example 6 | F | One-touch | One-touch | One-touch | Absence | ○ | ○ | ○ | ○ |
| Example 7 | G | Luer fit | Luer fit | Luer fit | Absence | ○ | ○ | ○ | ○ |
| Example 8 | G | One-touch | One-touch | One-touch | Absence | ○ | ○ | ○ | ○ |
| Example 9 | H | Luer fit | Luer fit | Luer fit | Absence | ○ | ○ | ○ | ○ |
| Example 10 | H | One-touch | One-touch | One-touch | Absence | ○ | ○ | ○ | ○ |
| Comparative Example 1 | A | Hose nipple (PP) | Hose nipple (PP) | Hose nipple (PP) | Absence | Δ | Δ | Δ | Δ |
| Comparative Example 2 | B | Hose nipple (PC) | Hose nipple (PC) | Hose nipple (PC) | Absence | Δ | ○ | ○ | ○ |
| Comparative Example 3 | C | Hose nipple (PC) | Hose nipple (PC) | Hose nipple (PC) | Absence | Δ | ○ | ○ | Δ |
| Comparative Example 4 | D | Hose nipple (metal) | Hose nipple (metal) | Hose nipple (metal) | Presence | × | Δ | Δ | Δ |
| Comparative Example 5 | D | Luer fit (PP) | Luer fit (PP) | Hose nipple (metal) | Absence | ○ | ○ | ○ | Δ |
| Comparative Example 6 | D | One-touch | One-touch | Hose nipple (metal) | Absence | ○ | ○ | ○ | Δ |
| Comparative Example 7 | E | Hose nipple (PP) | Hose nipple (PP) | Hose nipple (PP) | Absence | Δ | Δ | Δ | Δ |
| Comparative Example 8 | F | Hose nipple (PP) | Hose nipple (PP) | Hose nipple (PP) | Absence | Δ | Δ | Δ | Δ |
| Comparative Example 9 | G | Hose nipple (PP) | Hose nipple (PP) | Hose nipple (PP) | Absence | Δ | Δ | Δ | Δ |
| Comparative Example 10 | H | Hose nipple (PP) | Hose nipple (PP) | Hose nipple (PP) | Absence | Δ | Δ | Δ | Δ |

### Test Method 2: One-month Evaluation of 25°C Storage Durability Test

A test was performed and evaluated in the same manner as in Test Method 1 except that the temperature of the constant-temperature tank ("OF-600S" available from AS ONE Corporation) was changed to 25°C. The results are presented in Table 3.

**[Table 3]**

| | | | | | One-month evaluation result of 5°C storage durability test (n3) | | | | |
|---|---|---|---|---|---|---|---|---|---|
| | | Joint structure | | | Leakage | Tube | Joint strength | | |
| | Hollow fiber deaeration module | Liquid supply portion | Liquid discharge portion | Gas discharge portion | Presence or absence | Dust | Liquid supply portion | Liquid discharge portion | Gas discharge portion |
| Example 1 | A | Luer fit (PP) | Luer fit (PP) | Luer fit (PP) | Absence | ○ | ○ | ○ | ○ |
| Example 2 | A | One-touch | One-touch | One-touch | Absence | ○ | ○ | ○ | ○ |
| Example 3 | E | Luer fit | Luer fit | Luer fit | Absence | ○ | ○ | ○ | ○ |
| Example 4 | E | One-touch | One-touch | One-touch | Absence | ○ | ○ | ○ | ○ |
| Example 5 | F | Luer fit | Luer fit | Luer fit | Absence | ○ | ○ | ○ | ○ |
| Example 6 | F | One-touch | One-touch | One-touch | Absence | ○ | ○ | ○ | ○ |
| Example 7 | G | Luer fit | Luer fit | Luer fit | Absence | ○ | ○ | ○ | ○ |
| Example 8 | G | One-touch | One-touch | One-touch | Absence | ○ | ○ | ○ | ○ |
| Example 9 | H | Luer fit | Luer fit | Luer fit | Absence | ○ | ○ | ○ | ○ |
| Example 10 | H | One-touch | One-touch | One-touch | Absence | ○ | ○ | ○ | ○ |
| Comparative Example 1 | A | Hose nipple (PP) | Hose nipple (PP) | Hose nipple (PP) | Absence | Δ | Δ | Δ | Δ |
| Comparative Example 2 | B | Hose nipple (PC) | Hose nipple (PC) | Hose nipple (PC) | Absence | Δ | Δ | Δ | Δ |
| Comparative Example 3 | C | Hose nipple (PC) | Hose nipple (PC) | Hose nipple (PC) | Absence | Δ | ○ | ○ | Δ |
| Comparative Example 4 | D | Hose nipple (metal) | Hose nipple (metal) | Hose nipple (metal) | Presence | × | Δ | Δ | Δ |
| Comparative Example 5 | D | Luer fit (PP) | Luer fit (PP) | Hose nipple (metal) | Absence | ○ | ○ | ○ | Δ |
| Comparative Example 6 | D | One-touch | One-touch | Hose nipple (metal) | Absence | ○ | ○ | ○ | Δ |
| Comparative Example 7 | E | Hose nipple (PP) | Hose nipple (PP) | Hose nipple (PP) | Absence | Δ | Δ | Δ | Δ |
| Comparative Example 8 | F | Hose nipple (PP) | Hose nipple (PP) | Hose nipple (PP) | Absence | Δ | Δ | Δ | Δ |
| Comparative Example 9 | G | Hose nipple (PP) | Hose nipple (PP) | Hose nipple (PP) | Absence | Δ | Δ | Δ | Δ |
| Comparative Example 10 | H | Hose nipple (PP) | Hose nipple (PP) | Hose nipple (PP) | Absence | Δ | Δ | Δ | Δ |

### Test Method 3: One-month Evaluation of 40°C Storage Durability Test

A test was performed and evaluated in the same manner as in Test Method 1 except that the temperature of the constant-temperature tank ("OF-600S" available from AS ONE Corporation) was changed to 40°C. The results are shown in Table 4.

**[Table 4]**

| | | | | | One-month evaluation result of 5°C storage durability test (n3) | | | | |
|---|---|---|---|---|---|---|---|---|---|
| | | Joint structure | | | Leakage | Tube | Joint strength | | |
| | Hollow fiber deaeration module | Liquid supply portion | Liquid discharge portion | Gas discharge portion | Presence or absence | Dust | Liquid supply portion | Liquid discharge portion | Gas discharge portion |
| Example 1 | A | Luer fit (PP) | Luer fit (PP) | Luer fit (PP) | Absence | ○ | ○ | ○ | ○ |
| Example 2 | A | One-touch | One-touch | One-touch | Absence | ○ | ○ | ○ | ○ |
| Example 3 | E | Luer fit | Luer fit | Luer fit | Absence | ○ | ○ | ○ | ○ |
| Example 4 | E | One-touch | One-touch | One-touch | Absence | ○ | ○ | ○ | ○ |
| Example 5 | F | Luer fit | Luer fit | Luer fit | Absence | ○ | ○ | ○ | ○ |
| Example 6 | F | One-touch | One-touch | One-touch | Absence | ○ | ○ | ○ | ○ |
| Example 7 | G | Luer fit | Luer fit | Luer fit | Absence | ○ | ○ | ○ | ○ |
| Example 8 | G | One-touch | One-touch | One-touch | Absence | ○ | ○ | ○ | ○ |
| Example 9 | H | Luer fit | Luer fit | Luer fit | Absence | ○ | ○ | ○ | ○ |
| Example 10 | H | One-touch | One-touch | One-touch | Absence | ○ | ○ | ○ | ○ |
| Comparative Example 1 | A | Hose nipple (PP) | Hose nipple (PP) | Hose nipple (PP) | Absence | × | Δ | Δ | Δ |
| Comparative Example 2 | B | Hose nipple (PC) | Hose nipple (PC) | Hose nipple (PC) | Absence | × | Δ | Δ | × |
| Comparative Example 3 | C | Hose nipple (PC) | Hose nipple (PC) | Hose nipple (PC) | Absence | × | ○ | ○ | × |
| Comparative Example 4 | D | Hose nipple (metal) | Hose nipple (metal) | Hose nipple (metal) | Presence | × | Δ | Δ | Δ |
| Comparative Example 5 | D | Luer fit (PP) | Luer fit (PP) | Hose nipple (metal) | Absence | ○ | ○ | ○ | Δ |
| Comparative Example 6 | D | One-touch | One-touch | Hose nipple (metal) | Absence | ○ | ○ | ○ | Δ |
| Comparative Example 7 | E | Hose nipple (PP) | Hose nipple (PP) | Hose nipple (PP) | Absence | × | Δ | Δ | Δ |
| Comparative Example 8 | F | Hose nipple (PP) | Hose nipple (PP) | Hose nipple (PP) | Absence | × | Δ | Δ | Δ |
| Comparative Example 9 | G | Hose nipple (PP) | Hose nipple (PP) | Hose nipple (PP) | Absence | × | Δ | Δ | Δ |
| Comparative Example 10 | H | Hose nipple (PP) | Hose nipple (PP) | Hose nipple (PP) | Absence | × | Δ | Δ | Δ |

From the results in Table 2, in both of the internal perfusion type hollow fiber deaeration module in Examples 1 to 4 and the external perfusion type hollow fiber deaeration module in Examples 5 to 10, in the 5°C storage durability test, there was no leakage in the module even after 1 month from the start of the test, and no dust from the tube member was found. In addition, it was found that the strength of the joint structure in the liquid supply portion, the liquid discharge portion, and the gas discharge portion was good, and the original deaeration performance was maintained.

From the results in Table 3, in both of the internal perfusion type hollow fiber deaeration module in Examples 1 to 4 and the external perfusion type hollow fiber deaeration module in Examples 5 to 10, in the 25°C storage durability test, there was no leakage in the module even after 1 month from the start of the test, and no dust from the tube member was found. In addition, it was found that the strength of the joint structure in the liquid supply portion, the liquid discharge portion, and the gas discharge portion was good, and the original deaeration performance was maintained.
Moreover, from the results in Table 4, in both of the internal perfusion type hollow fiber deaeration module in Examples 1 to 4 and the external perfusion type hollow fiber deaeration module in Examples 5 to 10, in the 40°C storage durability test, there was no leakage in the module even after 1 month from the start of the test, and no dust from the tube member was found. In addition, it was found that the strength of the joint structure in the liquid supply portion, the liquid discharge portion, and the gas discharge portion was good, and the original deaeration performance was maintained.

On the other hand, in the 5°C storage durability test after 1 month from the start of the test (Table 2), in Comparative Examples 1 to 4 and 7 to 10, the number of dust (fine particle size: 0.1 µm or more) generated from the tube member was 1000 or more. In Comparative Examples 1 and 3 to 10, the strength of the joint structure in at least one of the liquid supply portion, the liquid discharge portion, and the gas discharge portion was poor.

In the 25°C storage durability test after 1 month from the start of the test (Table 3), in Comparative Examples 1 to 4 and 7 to 10, the number of dust (fine particle size: 0.1 µm or more) generated from the tube member was 1000 or more. In Comparative Examples 1 to 10, the strength of the joint structure in at least one of the liquid supply portion, the liquid discharge portion, and the gas discharge portion was poor.

In addition, in the 40°C storage durability test after 1 month from the start of the test (Table 4), in Comparative Examples 1 to 4 and 7 to 10, the number of dust (fine particle size: 0.1 µm or more) generated from the tube member was 10000 or more. In Comparative Examples 1 to 10, the strength of the joint structure in at least one of the liquid supply portion, the liquid discharge portion, and the gas discharge portion was poor.

### REFERENCE SIGNS LIST

1A Pure water supply device
2A Chemical analysis device
2B Chemical analysis device
2C Chemical analysis device
2D Chemical analysis device
3 Deaeration device
3a Flow path
3b Flow path
3c Flow path
4A (Bio) chemical analysis unit
4B (Bio) chemical analysis unit
5 Reaction tank
6 Vacuum pump
11A Water supply tank
12A Constant-temperature tank
12AA Supply pipe
12AB Discharge pipe
13A Flow path
14A Liquid feeding pump
15A Water supply pump
18A Flow path
19A In-liquid fine particle meter
19AA Supply pipe
19AB Discharge pipe
20A Hollow fiber deaeration module
20AA Hollow fiber deaeration module
20B Hollow fiber deaeration module
20C Hollow fiber deaeration module
20D Hollow fiber deaeration module
20E Hollow fiber deaeration module
22 Hollow fiber membrane bundle
22a One longitudinal end portion
22b Other longitudinal end portion
22C Hollow fiber membrane bundle
210 Housing
210C Housing
210D Housing
210Da Extending portion
210Db Rib portion
210Dc Ring member
210Dd Nut
210De Extending portion
210Df Rib portion
210Dg Ring member
210Dh Nut
210E Housing
210Ea Extending portion
210Eb Extending portion
211 Cylindrical body
211a One axial end portion
211b Other axial end portion
211c Axially lower end portion
211C Cylindrical body
211Ca One longitudinal end portion
211d Axially upper end portion
212A First lid unit
212Aa First wall portion
212Ab Second wall portion
212B Third lid unit
212Ba First wall portion
212Bb Second wall portion
212C Lid unit
213A Second lid unit
213Aa First wall portion
213Ab Second wall portion
213B Fourth lid unit
213Ba First wall portion
213Bb Second wall portion
214 First screw portion
215 Second screw portion
216A Liquid supply portion (first liquid supply portion)
216A Liquid supply portion
216Aa Liquid supply port
216B Second liquid supply portion
216B Liquid supply portion (second liquid supply portion)
216B Liquid supply portion
216Ba Liquid supply port
216C Liquid supply portion (first liquid supply portion)
216C Liquid supply portion
216Ca First connector portion
216D Liquid supply portion (second liquid supply portion)
216D Liquid supply portion
216E Liquid supply portion (second liquid supply portion)
216E Liquid supply portion
217A Liquid discharge portion (first liquid discharge portion)
217A Liquid discharge portion
217Aa Liquid discharge port
217B Second liquid discharge portion
217B Liquid discharge portion (second liquid discharge portion)
217B Liquid discharge portion
217Ba Liquid discharge port
217C Liquid discharge portion (first liquid discharge portion)
217C Liquid discharge portion
217Ca Second connector portion
217D Liquid discharge portion (second liquid supply portion)
217D Liquid discharge portion
217E Liquid discharge portion (second liquid supply portion)
217E Liquid discharge portion
218A Gas discharge portion (first gas discharge portion)
218A Gas discharge portion
218Aa Gas discharge port
218B Gas discharge portion (second gas discharge portion)
218B Gas discharge portion
218Ba Gas discharge port
218C Gas discharge portion (first gas discharge portion)
218C Gas discharge portion
218Ca Gas discharge port
218D Gas discharge portion
218E Gas discharge portion
220 Hollow fiber membrane
220a One longitudinal end portion
220b Other longitudinal end portion
220C Hollow fiber membrane
220Ca One longitudinal end portion
220Cb Other longitudinal end portion
231A First sealing portion
231B Third sealing portion
232A Second sealing portion
232B Fourth sealing portion
232Ba Communication port
233 Central pipe
234 Outer support body
234C Outer support body
306 Circulation pump
307 Heater
308 Cooling unit
309 Water supply tank
310 Water supply pump
311 Water supply valve
312 Waste liquid valve
313 Deaeration device
314 Vacuum pump
315 Light source lamp
316 Multi-wavelength photometer
401 Reaction disk
402 Reaction container
403 Reaction tank
404 Discharge pipe
405 Supply pipe
500 Concentration
501 Reaction disk
502 Reaction container
503 Reaction tank
504 Water supply tank
505 Deaeration device
506 Water supply pump
507 Water supply valve
508 Vacuum pump
509 Discharge pipe
510 Supply pipe
511 Circulation pump
512 Heater
513 Cooling unit
514 Waste liquid valve
515 Light source lamp
516 Multi-wavelength photometer
517 Supply pipe
601 Specimen container
602 Specimen dispensing mechanism
603 Reaction container
604 Reagent container
605 Reagent dispensing mechanism
606 Reaction tank
701A One-touch joint structure
701Aa Joint body
701Ab Tube connection portion
701Ac Recess
701Ad Seal member
701Ae Backing ring
701Af Locking ring
701Ag Tube insertion port
701Ah Collar
701Ai Open sleeve
701B One-touch joint structure
701C One-touch joint structure
701E Luer fitting joint structure
702A One-touch joint structure
702B One-touch joint structure
702C One-touch joint structure
702E Luer fitting joint structure

## Claims

1. A chemical analysis device configured to perform chemical analysis or biochemical analysis of a specimen, the chemical analysis device comprising:
a constant-temperature tank configured to maintain a temperature of a container containing a specimen, and
a deaeration unit including a hollow fiber deaeration module configured to deaerate a dissolved gas contained in constant-temperature water in the constant-temperature tank,
wherein the hollow fiber deaeration module includes a housing and a hollow fiber membrane disposed in an internal space of the housing,
the housing includes
a first liquid supply portion configured to connect an outside of the housing and an internal space of the hollow fiber membrane and supply the constant-temperature water from the outside of the housing to an inside of the hollow fiber membrane,
a first liquid discharge portion configured to connect the internal space of the hollow fiber membrane and the outside of the housing and discharge deaerated constant-temperature water from the internal space of the hollow fiber membrane to the outside of the housing, and
at least one first gas discharge portion configured to connect the internal space of the housing and the outside of the housing and depressurize the internal space of the housing, and
the hollow fiber deaeration module has, at the at least one first gas discharge portion, a one-touch joint structure or a luer fitting joint structure that connects the housing and a tube member.

2. The chemical analysis device according to claim 1, wherein the hollow fiber deaeration module further has, at at least one of the first liquid supply portion or the first liquid discharge portion, the one-touch joint structure or the luer fitting joint structure that connects the housing and the tube member.

3. The chemical analysis device according to claim 1 or 2, wherein in one or a plurality of the at least one first gas discharge portion, the first liquid supply portion, and the first liquid discharge portion, the housing includes an extending portion which is provided integrally with the housing and extends outward from the housing and to which the one-touch joint structure or the luer fitting joint structure is attached.

4. The chemical analysis device according to claim 3, wherein the housing further includes at least one rib portion provided in the extending portion.

5. The chemical analysis device according to claim 1,
wherein the housing includes
a cylindrical body disposed in such a way that an axial direction is substantially horizontal,
a first lid unit attached to one axial end portion of the cylindrical body, and
a second lid unit attached to the other axial end portion of the cylindrical body,
the first lid unit includes the first liquid supply portion and the second lid unit includes the first liquid discharge portion, and
the cylindrical body includes the at least one first gas discharge portion.

6. The chemical analysis device according to claim 5,
wherein the cylindrical body has a cylindrical shape disposed in such a way that the axial direction is parallel to a horizontal direction, and
the at least one first gas discharge portion is provided at a peripheral wall of the cylindrical body.

7. The chemical analysis device according to claim 5, wherein the cylindrical body includes a first screw portion where the cylindrical body and the first lid unit are screwed together, and a second screw portion where the cylindrical body and the second lid unit are screwed together.

8. The chemical analysis device according to claim 5,
wherein the hollow fiber deaeration module includes a first sealing portion that seals the one axial end portion of the cylindrical body and a second sealing portion that seals the other axial end portion of the cylindrical body, and
one longitudinal end portion of the hollow fiber membrane is fixed to the first sealing portion and the other longitudinal end portion of the hollow fiber membrane is fixed to the second sealing portion.

9. The chemical analysis device according to claim 1, wherein the hollow fiber membrane is made of a polyolefin resin, a fluororesin, or a silicone resin.

10. The chemical analysis device according to claim 1, wherein the housing is made of a polyolefin resin or an aromatic polyester resin.

11. A chemical analysis device configured to perform chemical analysis or biochemical analysis of a specimen, the chemical analysis device comprising:
a constant-temperature tank configured to maintain a temperature of a container containing a specimen, and
a deaeration unit including a hollow fiber deaeration module configured to deaerate a dissolved gas contained in constant-temperature water in the constant-temperature tank,
wherein the hollow fiber deaeration module includes a housing and a hollow fiber membrane disposed in an internal space of the housing,
the housing includes
a second liquid supply portion configured to connect an outside of the housing and the internal space of the housing and supply the constant-temperature water from the outside of the housing to the internal space of the housing,
a second liquid discharge portion configured to connect the internal space of the housing and the outside of the housing and discharge deaerated constant-temperature water from the internal space of the housing to the outside of the housing, and
at least one second gas discharge portion configured to connect an internal space of the hollow fiber membrane and the outside of the housing and depressurize the internal space of the hollow fiber membrane, and
the hollow fiber deaeration module has, at the at least one second gas discharge portion, a one-touch joint structure or a luer fitting joint structure that connects the housing and a tube member.

12. The chemical analysis device according to claim 11, wherein the hollow fiber deaeration module further has, at at least one of the second liquid supply portion or the second liquid discharge portion, the one-touch joint structure or the luer fitting joint structure that connects the housing and the tube member.

13. The chemical analysis device according to claim 11 or 12, wherein in one or a plurality of the at least one second gas discharge portion, the second liquid supply portion, and the second liquid discharge portion, the housing includes an extending portion which is provided integrally with the housing and extends outward from the housing and in which the one-touch joint structure or the luer fitting joint structure is disposed.

14. The chemical analysis device according to claim 13, wherein the housing further includes at least one rib portion provided in the extending portion.

15. The chemical analysis device according to claim 11,
wherein the housing includes
a cylindrical body disposed in such a way that an axial direction is substantially vertical,
a third lid unit attached to an axially lower end portion of the cylindrical body, and
a fourth lid unit attached to an axially upper end portion of the cylindrical body,
the cylindrical body includes the second liquid supply portion and the fourth lid unit includes the second liquid discharge portion, and
the third lid unit includes the at least one second gas discharge portion.

16. The chemical analysis device according to claim 15, wherein the third lid unit includes the at least one second gas discharge portion.

17. The chemical analysis device according to claim 15, wherein the cylindrical body includes a third screw portion where the cylindrical body and the third lid unit are screwed together, and a fourth screw portion where the cylindrical body and the fourth lid unit are screwed together.

18. The chemical analysis device according to claim 15,
wherein the hollow fiber deaeration module includes a third sealing portion that seals the axially upper end portion of the cylindrical body and a fourth sealing portion that seals the axially lower end portion of the cylindrical body, and
a longitudinally upper end portion of the hollow fiber membrane is fixed to the third sealing portion and a longitudinally lower end portion of the hollow fiber membrane is fixed to the fourth sealing portion.

19. The chemical analysis device according to claim 11, wherein the hollow fiber membrane is made of a polyolefin resin, a fluororesin, or a silicone resin.

20. The chemical analysis device according to claim 11, wherein the housing is made of a polyolefin resin or an aromatic polyester resin.

21. A hollow fiber deaeration module configured to perform chemical analysis or biochemical analysis of a specimen, the hollow fiber deaeration module comprising:
a housing; and
a hollow fiber membrane disposed in an internal space of the housing,
wherein the housing includes
a first liquid supply portion configured to connect an outside of the housing and an internal space of the hollow fiber membrane and supply constant-temperature water from the outside of the housing to an inside of the hollow fiber membrane,
a first liquid discharge portion configured to connect the internal space of the hollow fiber membrane and the outside of the housing and discharge deaerated constant-temperature water from the internal space of the hollow fiber membrane to the outside of the housing, and
at least one first gas discharge portion configured to connect the internal space of the housing and the outside of the housing and depressurize the internal space of the housing, and
a one-touch joint structure or a luer fitting joint structure that connects the housing and a tube member is provided at the at least one first gas discharge portion.

22. A hollow fiber deaeration module configured to perform chemical analysis or biochemical analysis of a specimen, the hollow fiber deaeration module comprising:
a housing; and
a hollow fiber membrane disposed in an internal space of the housing,
wherein the housing includes
a second liquid supply portion configured to connect an outside of the housing and the internal space of the housing and supply constant-temperature water from the outside of the housing to the internal space of the housing,
a second liquid discharge portion configured to connect the internal space of the housing and the outside of the housing and discharge deaerated constant-temperature water from the internal space of the housing to the outside of the housing, and
at least one second gas discharge portion configured to connect an internal space of the hollow fiber membrane and the outside of the housing and depressurize the internal space of the hollow fiber membrane, and
a one-touch joint structure or a luer fitting joint structure that connects the housing and a tube member is provided at the at least one second gas discharge portion.

23. A method for deaerating a dissolved gas contained in constant-temperature water in the constant-temperature tank in the chemical analysis device according to claim 1 or 11, the method for deaerating the constant-temperature water comprising,
in the hollow fiber deaeration module, deaerating the constant-temperature water by supplying the constant-temperature water to an outside of a hollow fiber membrane and depressurizing an inside of the hollow fiber membrane.
